# EUROPÄISCHE PATENTANMELDUNG

(11) **EP 3 034 960 A1**
(43) Veröffentlichungstag der Anmeldung: **22.06.2016**
(21) Anmeldenummer: 14199163.8
(22) Anmeldetag: 19.12.2014
(51) Int. Cl.: F24J 2/14, F24J 2/52, F24J 2/54

(54) **Vorrichtung zur Konzentration von Sonnenstrahlung**

(71) Anmelder: Heliovis AG, 2351 Wiener Neudorf (AT)
(72) Erfinder: STÖGER, Elmar, 2822 Bad Erlach (AT); TIEFENBACHER, Felix, 1190 Wien (AT)
(74) Vertreter: Sonn & Partner Patentanwälte

(57) **Zusammenfassung**

Vorrichtung (1) zur Konzentration von Sonnenstrahlung in einem Absorber (1') mit einem aufblasbaren Konzentrator-Kissen (2), welches ein Deckfolienelement (3'') mit einem lichtdurchlässigen Eintrittsfenster (3) zum Einkoppeln von Sonnenstrahlung und eine das Konzentrator-Kissen (2) in zumindest zwei Hohlräume (4, 5) unterteilende, im aufgeblasenen Zustand des Konzentrator-Kissens (2) eine Wölbung aufweisende Reflektorfolie (6) zum Konzentrieren der Sonnenstrahlung in einem Absorber (1') aufweist, mit einer Schwenkeinrichtung (7), mit welcher das Konzentrator-Kissen (2) insbesondere um dessen Längsachse verschwenkbar ist, mit einer an der Schwenkeinrichtung (7) befestigten Halteeinrichtung (31) zur Halterung des Konzentrator-Kissens (2), und mit einer Einstelleinrichtung (56) zur Einstellung der Wölbung der Reflektorfolie (6) des Konzentrator-Kissens (2). die Halteeinrichtung (31) weist einen in Längsrichtung des Konzentrator-Kissens (2) erstreckten unteren Längsträger (33) auf, welcher mit einem Bodenfolienelement (3') des Konzentrator-Kissens (2) verbunden ist. Die Einstelleinrichtung (56) weist zur Einstellung der Wölbung der Reflektorfolie (6) ein Spannelement (57) zwischen dem unteren Längsträger (33) der Halteeinrichtung (31) und der Reflektorfolie (6) auf.

## Beschreibung

Die Erfindung betrifft eine Vorrichtung zur Konzentration von Sonnenstrahlung in einem Absorber, mit einem aufblasbaren Konzentrator-Kissen, welches ein Deckfolienelement mit einem lichtdurchlässigen Eintrittsfenster zum Einkoppeln von Sonnenstrahlung und eine das Konzentrator-Kissen in zumindest zwei Hohlräume unterteilende, im aufgeblasenen Zustand des Konzentrator-Kissens eine Wölbung aufweisende Reflektorfolie zum Konzentrieren der Sonnenstrahlung in einem Absorber aufweist, mit einer Schwenkeinrichtung, mit welcher das Konzentrator-Kissen insbesondere um dessen Längsachse verschwenkbar ist, mit einer an der Schwenkeinrichtung befestigten Halteeinrichtung zur Halterung des Konzentrator-Kissens, und mit einer Einstelleinrichtung zur Einstellung der Wölbung der Reflektorfolie des Konzentrator-Kissens.

Aus der WO 2012/145774 ist eine gattungsgemäße Vorrichtung zur Konzentration von Sonnenstrahlung in einem Absorber bekannt geworden. Die Vorrichtung weist einen aufblasbaren Konzentrator auf, welcher durch eine langgestreckte, im Wesentlichen zylindrische schlauchförmige Hülle aus mehreren Folienelementen gebildet ist. Das Kissen weist an der Oberseite ein transparentes Eintrittsfenster zum Durchtritt von Sonnenstrahlung auf. Weiters ist eine Reflektorfolie vorgesehen, mit welcher das Kissen in zumindest zwei getrennte Druckräume unterteilt wird. Die Reflektorfolie weist eine Spiegelfläche auf, mit welcher die eingekoppelte Sonnenstrahlung in Richtung eines Absorbers gebündelt wird. Zur Verankerung des Konzentrators ist ein Verankerungsgerüst vorgesehen. Das Verankerungsgerüst weist ein Nachführungssystem auf, um den kissenförmigen Konzentrator dem Sonnenlauf nachzuführen. Das Nachführungssystem weist mehrere das Konzentrator-Kissen umschließende Nachführungsringe auf, welche mittels Rollvorrichtungen drehbar gelagert sind. Die Nachführungsringe sind auf bodenseitigen Sockelelementen abgestützt. Um die Verschwenkung des Konzentrators zu bewirken, sind die Nachführungsringe über lokale, im Wesentlichen quadratische Halteplatten an den Längsseiten des Konzentrator-Kissens befestigt.

Durch den Druckunterschied zwischen den beiden Druckräumen des Konzentrators wird die Spiegelfläche konkav gekrümmt, so dass die einfallende Sonnenstrahlung in dem Absorber fokussiert wird. In der Praxis hat sich gezeigt, dass der Wirkungsgrad des Konzentrators dadurch beeinträchtigt wird, dass die Krümmung der Spiegelfolie von der Parabelform abweicht, welche eine optimale Fokussierung der Sonnenstrahlung ermöglichen würde.

Um dieses Problem zu lindern, wurde in der US 2009/0260620 A1 ein aufblasbarer Sonnenkollektor vorgeschlagen, bei welchem der untere Hohlraum mit Korrekturkammern seitlich unterhalb der Spiegelfolie ausgestattet wird. Die Druckverhältnisse in den Korrekturkammern werden dabei so gewählt, dass die Spiegelfolie stärker an die Parabelform angeglichen wird.

Diese Maßnahme hat sich jedoch als ungenügend herausgestellt, da sich die Druckunterschiede in den Korrekturkammern auf die Geometrie der flexiblen Seitenwände des Sonnenkollektors auswirken, welche wiederum mit der Reflektorfolie verbunden sind. Dadurch kann die Krümmung der Spiegelfolie auf nicht vorhersehbare Weise verändert werden. Darüber hinaus müssten die Drücke in den Korrekturkammern nachteiligerweise sehr präzise eingestellt werden, um die Krümmung der Spiegelfolie durch Druckausübung von der Unterseite her anzupassen. Demnach erfordert der Stand der Technik eine aufwändige Steuerung bzw. Regelung der Druckverhältnisse. Durch den Einfluss der Korrekturkammern auf den flexiblen Folienaufbau des Sonnenkollektors kann die Spiegelfolie selbst bei präziser Einstellung der Druckverhältnisse nur ungenau an die Parabelform angeglichen werden. Darüber hinaus ist bei dem Stand der Technik nachteilig, dass zumindest zwei Korrekturkammern an den Längsseiten vorzusehen sind. Dadurch wird Fertigung, Montage und Betrieb des Sonnenkollektors erschwert.

Demnach besteht die Aufgabe der vorliegenden Erfindung darin, die Nachteile des Standes der Technik zu beseitigen bzw. zu lindern. Die Erfindung setzt sich daher insbesondere zum Ziel, eine Vorrichtung der eingangs angeführten Art zu schaffen, mit welcher die Krümmung der Reflektorfolie mit konstruktiv einfachen Mitteln präzise eingestellt werden kann, um den Wirkungsgrad der Energieumwandlung zu erhöhen.

Diese Aufgabe wird durch eine Vorrichtung mit den Merkmalen von Anspruch 1 gelöst. Bevorzugte Ausführungen sind in den abhängigen Ansprüchen angegeben.

Erfindungsgemäß weist die Halteeinrichtung einen in Längsrichtung des Konzentrator-Kissens erstreckten unteren Längsträger auf, welcher mit einem Bodenfolienelement des Konzentrator-Kissens verbunden ist, wobei die Einstelleinrichtung zur Einstellung der Wölbung der Reflektorfolie ein Spannelement zwischen dem unteren Längsträger der Halteeinrichtung und der Reflektorfolie aufweist.

Demnach ist das langgestreckte, im Querschnitt vorzugsweise im Wesentlichen zylindrische Konzentrator-Kissen an der Unterseite an dem unteren Längsträger der Halteeinrichtung befestigt. Für die Zwecke dieser Offenbarung beziehen sich die Begriffe "oben" und "unten" stets auf die Betriebsstellung der Vorrichtung, wobei das Bodenfolienelement des Konzentrator-Kissens einem Untergrund bzw. einer Bodenstruktur am Einsatzort zugewandt ist. Im Betriebszustand ist die Unterseite des Konzentrator-Kissen im Bereich des Bodenfolienelements an dem unteren Längsträger fixiert, welcher aus einem im Wesentlichen starren, d.h. gegenüber Betriebskräften im Wesentlichen unnachgiebigen, Material, insbesondere Metall, gefertigt ist. Dadurch kann eine stabile Halterung des Konzentrator-Kissens erzielt werden. Der Druckunterschied zwischen dem oberen Hohlraum und dem unteren Hohlraum des Konzentrator-Kissens bewirkt im aufgeblasenen Betriebszustand eine im Wesentlichen zweidimensionale, in Längsrichtung des Konzentrator-Kissens gleichbleibende Krümmung der Reflektorfolie, mit welcher eine Fokussierung der einfallenden Sonnenstrahlung in dem Absorber innerhalb des oberen Hohlraums bewerkstelligt wird. Zur Erzielung eines hohen Wirkungsgrads des Konzentrator-Kissens ist es wesentlich, dass die Sonnenstrahlung präzise im Bereich des Absorbers gebündelt wird. Die Durchbiegung der Reflektorfolie aufgrund des Druckunterschieds zwischen dem oberen und dem unteren Hohlraum des Konzentrator-Kissens würde ohne weitere Maßnahmen von der Parabelform abweichen, welche die höchste Energieausbeute versprechen würde. Zur Annäherung der Wölbung der Reflektorfolie an die Parabelform ist erfindungsgemäß ein Spannelement vorgesehen, welches auf der einen Seite mit der Reflektorfolie und auf der anderen Seite mit dem unteren Längsträger der Halteeinrichtung verbunden ist. Im gespannten Zustand des Spannelements im Betrieb des Konzentrators wird mittels des Spannelements eine zusätzliche Zugkraft auf die Reflektorfolie übertragen, welche eine geringfügige Streckung von Spiegelabschnitten der Reflektorfolie bewirkt. Damit kann die Abweichung der Spiegelfläche von der idealen Parabelform reduziert werden. Vorteilhafterweise kann die Energieausbeute des Konzentrator-Kissens durch diese einfache Maßnahme deutlich gesteigert werden. Die erfindungsgemäße Anordnung des Spannelements ermöglicht eine wesentlich genauere Anpassung der Querschnittsgeometrie der Reflektorfolie als der Stand der Technik der US 2009/0260620 A1, bei welchem direkt unterhalb der Reflektorfolie zusätzliche Druckkammern angeordnet wurden. Demgegenüber bewirkt das erfindungsgemäße Spannelement eine Knickstelle bzw. Einschnürung der Reflektorfolie im Bereich der Verbindung zwischen dem Spannelement und der Reflektorfolie. Durch das Spannelement wird daher eine Abweichung von dem stetigen Querschnittsverlauf der Reflektorfolie erzielt, welcher sich aus dem Druckunterschied zwischen dem oberen Hohlraum und dem unteren Hohlraum des Konzentrator-Kissens ergibt. Beidseits der Angriffsstelle des Spannelements an der Reflektorfolie werden zwei Spiegelabschnitte ausgebildet, mit welchen die einfallende Sonnenstrahlung in den Absorber reflektiert wird. Vorteilhafterweise lässt sich die vom Spannelement auf die Reflektorfolie übertragene Zugkraft wesentlich präziser und einfacher einstellen als die geringen Druckunterschiede in den Korrekturkammern des Standes der Technik, mit welchen ebenfalls eine gewisse Anpassung der Krümmung der Reflektorfolie herbeigeführt werden sollte. Die Einstellung der Reflektorfolie wird erfindungsgemäß zudem dadurch erleichtert, dass das Spannelement an dem unteren Längsträger der Halteeinrichtung befestigt ist, welcher im aufgeblasenen Zustand des Konzentrator-Kissens im Wesentlichen starr bzw. unbeweglich angeordnet ist. Demgegenüber können die Korrekturkammern beim Stand der Technik gewisse Verformungen an den biegsamen Seitenwänden des bekannten Sonnenkollektors hervorrufen, welche sich wiederum nachteilig auf die Form der Reflektorfolie auswirken. Diese Nachteile werden erfindungsgemäß dadurch vermieden, dass das Spannelement an dem im Wesentlichen starren unteren Längsträger der Halteeinrichtung befestigt ist. Dadurch kann die Zugkraft des Spannelements im Wesentlichen vollständig in eine Verformung der Reflektorfolie umgewandelt werden. Aufgrund der Biegsamkeit bzw. Eigenelastizität der Reflektorfolie wird die Reflektorfolie im Bereich der Angriffsstelle des Spannelements geringfügig nach unten, in Richtung des unteren Längsträgers gezogen, wodurch die Wölbung bzw. Einbuchtung der Spiegelfläche im Querschnitt an die gewünschte Parabelform angenähert wird.

Um die Spiegelfläche der Reflektorfolie in zwei im Wesentlichen ident ausgebildete Spiegelabschnitte zu unterteilen, ist es günstig, wenn das Spannelement mit einem mittleren Längsabschnitt der Reflektorfolie verbunden ist, welcher sich im Wesentlichen mittig zwischen den Längsrändern der Reflektorfolie in Längsrichtung des Konzentrator-Kissens erstreckt. Bei dieser Ausführung ist das Spannelement zur Übertragung einer Zugkraft auf den mittleren Längsabschnitt der Reflektorfolie eingerichtet, welcher sich im aufgeblasenen Zustand des Konzentrator-Kissens im Wesentlichen in der Mitte zwischen den parallel zur Längsrichtung des Konzentrator-Kissens verlaufenden Längsrändern der Reflektorfolie erstreckt. Das Spannelement unterteilt die Spiegelfläche in zwei in Längsrichtung des Konzentrator-Kissens erstreckte Spiegelabschnitte, welche sich ausgehend von der Angriffsstelle des Spannelements an dem mittleren Längsabschnitt der Reflektorfolie zu den beiden Längsrändern der Reflektorfolie erstrecken. Aufgrund der Wölbung der Reflektorfolie im aufgeblasenen Zustand des Konzentrator-Kissens weist der mittlere Längsabschnitt der Reflektorfolie den kürzesten Abstand zu dem unteren Längsträger der Halteeinrichtung auf, an welchem das Spannelement befestigt ist. Durch die Zugkraft auf den mittleren Längsabschnitt der Reflektorfolie werden die beiden Spiegelabschnitte geringfügig gestreckt, wobei die beiden Spiegelabschnitte durch eine Unstetigkeitsstelle, d.h. einen Knick bzw. eine Einbuchtung, der Reflektorfolie voneinander getrennt sind. Dadurch kann der Querschnitt der Reflektorfolie stärker an eine Parabelform angeglichen werden. Vorteilhafterweise kann so die Energieausbeute des Konzentrators weiter gesteigert werden kann.

Um die Sonnenstrahlung präzise an dem in Längsrichtung des Konzentrator-Kissens erstreckten Absorber zu bündeln, ist es günstig, wenn das Spannelement über im Wesentlichen die gesamte Länge der Reflektorfolie mit der Reflektorfolie und dem unteren Längsträger verbunden ist. Demnach erstreckt sich die Angriffsstelle des Spannelements an der Reflektorfolie in Längsrichtung des Konzentrator-Kissens im Wesentlichen über die gesamte Länge der Reflektorfolie. Dadurch kann die Querschnittsgeometrie der Reflektorfolie in Längsrichtung des Konzentrator-Kissens im Wesentlichen konstant gehalten werden, um eine gleichbleibende Fokussierung der Sonnenstrahlung entlang des Absorbers zu erzielen.

Zur Ausbildung des Konzentrator-Kissens als Folienverbund ist es günstig, wenn das Spannelement ein Spannfolienelement aufweist, welches im aufgeblasenen Zustand des Konzentrator-Kissens zwischen dem unteren Längsträger und der Reflektorfolie gespannt ist. Bei dieser Ausführung ist das Konzentrator-Kissen durch einen Folienaufbau gebildet, welcher zumindest das Deckfolienelement, das Bodenfolienelement, gegebenenfalls zudem zwei Seitenwandfolienelemente, und das Spannfolienelement umfasst. Im unaufgeblasenen Zustand ist der Folienaufbau des Konzentrator-Kissens in einer flachen, geschichteten Stellung anordenbar. Dadurch kann das Konzentrator-Kissen platzsparend aufbewahrt werden. Darüber hinaus wird der Transport an den Einsatzort erleichtert. Vorteilhaft ist insbesondere, dass der Folienaufbau des Konzentrator-Kissens, einschließlich des Spannfolienelements für die Einstellung der Wölbung der Reflektorfolie, zur Vorbereitung des Transports im unaufgeblasenen Zustand auf eine Rolle aufgerollt werden kann. Die Folienelemente des Konzentrator-Kissens, d.h. insbesondere das Deckfolienelement, das Bodenfolienelement oder das Spannfolienelement, sind vorzugsweise aus biegsamen, dünnwandigen Kunststoffmaterialien gefertigt.

Zur Übertragung einer Zugkraft auf den mittleren Längsabschnitt der Reflektorfolie ist es von Vorteil, wenn das Spannfolienelement einen im Wesentlichen rechtwinkelig an dem mittleren Längsabschnitt der Reflektorfolie angreifenden Spannabschnitt aufweist. Demnach ist der Spannabschnitt des Spannfolienelements im aufgeblasenen Betriebszustand des Konzentrator-Kissens im Wesentlichen senkrecht zur Reflektorfolie im Bereich der Angriffsstelle des Spannelements angeordnet, wobei der Spannabschnitt des Spannfolienelements flach bzw. eben ist. Bei dieser Ausführung entspricht die Querschnittsfläche des Spannfolienelements im Bereich des Spannabschnitts im Wesentlichen der Wandstärkejenes Folienstücks, mit welchem der Spannabschnitt ausgebildet wird. Vorteilhafterweise bewirkt diese Ausführung, dass die Zugkraft lediglich lokal an der Angriffsstelle des Spannabschnitts übertragen wird. Dadurch kann sichergestellt werden, dass die Reflektorfolie beidseits der Angriffsstelle des Spannelements an der Reflektorfolie im Wesentlichen gleichmäßig gespannt wird. Der Spannabschnitt des Spannfolienelements ist auf geeignete Weise mit der Reflektorfolie verbunden. Beispielsweise kann der Spannabschnitt in einen Befestigungsabschnitt des Spannfolienelements übergehen, welcher über eine Fügeverbindung, beispielsweise eine Naht, mit der Reflektorfolie verbunden ist.

Gemäß einer besonders bevorzugten Ausführung weist das Spannfolienelement eine aufblasbare Hohlkammer zur Einstellung des Abstands zwischen dem unteren Längsträger und der Reflektorfolie durch Aufblasen der Hohlkammer des Spannfolienelements auf. Bei dieser Ausführung kann die Wölbung der Reflektorfolie auf besonders einfache Weise präzise eingestellt und nachgestellt werden. Hiefür weist das Spannfolienelement eine aufblasbare, d.h. mit Luft befüllbare, Hohlkammer auf. Aufgrund der Biegsamkeit des Spannfolienelements kann die Form des Spannfolienelements durch Befüllung der Hohlkammer angepasst werden. Durch Aufblasen der Hohlkammer, d.h. durch Befüllung mit Luft, kann das Spannfolienelement von einem gestreckten Zustand in einen verkürzten Zustand überführt werden, um die Höhe des Spannfolienelements, d.h. den Abstand zwischen der unteren Angriffsstelle des Spannfolienelements an dem unteren Längsträger der Halteeinrichtung und der oberen Angriffsstelle des Spannfolienelements an der Reflektorfolie, zu verkürzen. Je nach Fülldruck der Hohlkammer des Spannfolienelements kann die Zugkraft auf die Reflektorfolie erhöht oder abgesenkt werden, um die Durchbiegung der Reflektorfolie ein- bzw. nachzustellen. Demnach kann im aufgeblasenen Zustand der Hohlkammer des Spannfolienelements eine höhere Zugkraft auf die Reflektorfolie als im unaufgeblasenen Zustand der Hohlkammer ausgeübt werden. Diese Ausführung weist eine Reihe von Vorteilen auf. Erstens kann die Wölbung der Reflektorfolie über den Fülldruck der Hohlkammer stufenlos bzw. kontinuierlich verändert werden. Zweitens kann eine Anpassung der Spannung der Reflektorfolie im laufenden Betrieb des Konzentrators vorgenommen werden. Zu diesem Zweck ist es günstig, wenn die Hohlkammer des Spannfolienelements mit einer Luftzufuhreinrichtung verbunden ist, mit welcher der Fülldruck der Hohlkammer und damit die Querschnittsgeometrie des Spannfolienelements im aufgeblasenen Betriebszustand des Konzentrator-Kissens einstellbar ist. Vorzugsweise ist die Luftzufuhreinrichtung mit einem Luftdrucksensor verbunden, mit welchem der Fülldruck der Hohlkammer des Spannfolienelements gemessen werden kann. Vorteilhafterweise können bei dieser Ausführungsform Veränderungen in der Geometrie der Reflektorfolie im laufenden Betrieb der Vorrichtung berücksichtigt werden. In der Praxis sind verschiedenste Einflussfaktoren auf die Wölbung der Reflektorfolie zu berücksichtigen. Dazu zählen insbesondere die Umgebungstemperatur am Einsatzort des Konzentrators, das Langzeitverhalten der Kunststoffmaterialien des Konzentrator-Kissens oder Druckverluste in den Hohlräumen des Konzentrator-Kissens bzw. in der Hohlkammer des Spannfolienelements. Die Ausführung des Spannfolienelements mit der Hohlkammer bringt, drittens, den Vorteil mit sich, dass die Einrichtung zur Einstellung der Wölbung der Reflektorfolie in den Folienaufbau des Konzentrator-Kissens integriert ist. Dadurch kann auf starre Einstellmittel verzichtet werden, welche das Zusammenlegen bzw. Aufrollen des Konzentrator-Kissens im unaufgeblasenen Zustand erschweren bzw. verhindern würden. Darüber hinaus ist es, viertens, günstig, dass die Volumenänderungen der Hohlkammer des Spannfolienelements im Vergleich zu den Abstandsänderungen zwischen der Reflektorfolie und dem unteren Längsträger vergleichsweise groß sind. Dadurch kann die Reflektorfolie präzise justiert werden, selbst wenn der Luftdruck innerhalb der Hohlkammer des Spannfolienelements nur mit einer begrenzten Genauigkeit eingestellt werden kann und überdies gewissen Schwankungen unterliegt.

Zur Ableitung der im Betrieb am Konzentrator-Kissen angreifenden Lasten, wie Windlasten, ist es günstig, wenn der untere Längsträger im Wesentlichen luftdicht mit den eine untere Durchtrittsöffnung des Konzentrator-Kissens begrenzenden Längsrändern des Bodenfolienelements des Konzentrator-Kissens verbunden ist. Bei dieser Ausführung weist daher das Bodenfolienelement eine untere Durchtrittsöffnung zum Durchtritt des unteren Längsträgers der Halteeinrichtung auf. Die Längsränder des Bodenfolienelements benachbart der unteren Durchtrittsöffnung sind im Wesentlichen luftdicht mit den Längsseiten des unteren Längsträgers verbunden, so dass ein unerwünschter Luftaustritt aus dem unteren Hohlraum des Konzentrator-Kissens im Wesentlichen vollständig verhindert wird.

Gemäß einer besonders bevorzugten Ausführungsform weist der untere Längsträger über Füllstäbe miteinander verbundene Längsgurte zur im Wesentlichen luftdichten Verbindung mit den die untere Durchtrittsöffnung begrenzenden Längsrändern des Bodenfolienelements auf, wobei zwischen den Längsgurten ein die untere Durchtrittsöffnung des Konzentrator-Kissens überbrückender Dichtfolienstreifen vorgesehen ist. Demnach tritt die Halteeinrichtung durch eine allseitig abgedichtete untere Durchtrittsöffnung an der Unterseite des Konzentrator-Kissens hindurch. Der untere Längsträger weist bei dieser Ausführung zumindest zwei langgestreckte Längsgurte auf, welche bezogen auf die Umfangsrichtung des Konzentrator-Kissens in einem Abstand zueinander angeordnet sind. Zwischen den Längsgurten ist ein die untere Durchtrittsöffnung des Konzentrator-Kissens überbrückender Dichtfolienstreifen vorgesehen. Zur Ausbildung der Längsgurte sind bevorzugt Stabelemente vorgesehen, welche insbesondere einen im Wesentlichen kreisförmigen Querschnitt aufweisen. Durch die Anordnung des Dichtfolienstreifens wird die Durchtrittsöffnung zwischen den Längsgurten des Längsträgers im Wesentlichen luftdicht verschlossen, so dass die Verbindung zwischen den Längsgurten des Längsträgers selbst nicht luftdicht ausgeführt sein muss.

Um die Stabilität des unteren Längsträgers zu steigern, ist es von Vorteil, wenn der untere Längsträger zumindest zwei weitere Längsgurte aufweist, welche parallel zu den Längsgurten in Längsrichtung des Konzentrator-Kissens erstreckt sind. Bevorzugt weisen die Längsträger einen im Wesentlichen rechteckigen, insbesondere im Wesentlichen quadratischen Querschnitt auf, wobei die oberen Ecken durch die Längsgurte und die unteren Ecken durch die weiteren Längsgurte gebildet sind. Zur Erzielung eines maximalen Volumens des Konzentrator-Kissens innerhalb der Schwenkeinrichtung ist es vorteilhaft, wenn die weiteren Längsgurte des unteren Längsträgers innerhalb des unteren Hohlraums des Konzentrator-Kissens angeordnet sind. Bei dieser Ausführung erstrecken sich die Längsgurte des unteren Längsträgers im Wesentlichen in der Ebene des Bodenfolienelements, wobei die weiteren Längsgurte des unteren Längsträgers in dem unteren Hohlraum des Konzentrator-Kissens angeordnet sind. Vorteilhafterweise kann so das innerhalb der Schwenkeinrichtung zur Verfügung stehende Einbauvolumen optimal genützt werden.

Bevorzugt sind die Längsgurte und/oder die weiteren Längsgurte des oberen Längsträgers über Füllstäbe miteinander verbunden, wobei vorzugsweise weitere Füllstäbe zwischen den Längsgurten und den weiteren Längsgurten vorgesehen sind. Dadurch sind die Längsträger als Fachwerkträger ausgebildet.

Um das Konzentrator-Kissen an den unteren Längsträger anzuschließen, ist bevorzugt vorgesehen, dass an den Längsgurten des unteren Längsträgers jeweils ein Profilelement angeordnet ist, welches mit einem Verbindungselement zur im Wesentlichen luftdichten Verbindung mit einem der Längsränder des Bodenfolienelements und mit einem weiteren Verbindungselement zur im Wesentlichen luftdichten Verbindung mit einem der Längsränder des Dichtfolienstreifens verbunden ist.

Um die Verbindungen zwischen dem unteren Längsträger und dem Konzentrator-Kissen im Wesentlichen luftdicht zu gestalten, können verschiedene Dichtmittel vorgesehen sein.

Zur Abdichtung der Verbindung zwischen dem unteren Längsträger und dem Konzentrator-Kissen ist es günstig, wenn als Verbindungselement eine Kederschiene vorgesehen ist, in welcher ein Kederelement an einem der Längsränder des Bodenfolienelements angeordnet ist. Bei dieser Ausführung ist daher als Dichtmittel zwischen dem Konzentrator-Kissen und dem unteren Längsträger eine Kedereinrichtung vorgesehen, welche durch die Kederelemente und die entsprechenden Kederschienen gebildet ist. Die Kederelemente erstrecken sich über die Länge der Längsränder des Bodenfolienelements. An den Längsgurten des unteren Längsträgers sind entsprechende Kederschienen vorgesehen, welche sich in Längsrichtung des unteren Längsträgers und damit parallel zu den Längsrändern des Bodenfolienelements erstrecken. Das Kederelement weist einen größeren Querschnitt als das Bodenfolienelement auf, wobei das Kederelement vorzugsweise mit einem runden, insbesondere kreisförmigen, Querschnitt ausgebildet ist. Durch den Druck im unteren Hohlraum des Konzentrator-Kissens liegt das Bodenfolienelement in einem gespannten Zustand vor, so dass die Kederelemente an den Längsrändern des Bodenfolienelements gegen die Innenwände der Kederschienen gedrückt werden. Dadurch wird eine im Wesentlichen luftdichte Anbindung des Konzentrator-Kissens an den unteren Längsträger erzielt, welche sich als besonders zuverlässig erwiesen hat.

Um den Dichtfolienstreifen auf entsprechende Weise im Wesentlichen luftdicht mit den Längsgurten des unteren Längsträgers zu verbinden, ist es günstig, wenn als weiteres Verbindungselement eine weitere Kederschiene vorgesehen ist, in welcher ein weiteres Kederelement an einem der Längsränder des Dichtfolienstreifens angeordnet ist. Bei dieser Ausführung sind an den gegenüberliegenden Längsrändern jedes Profilelements Kederschienen vorgesehen, welche vorzugsweise im Wesentlichen ident ausgebildet sind. Demnach ist jedes Profilelement nach außen mit einem der Längsränder des Bodenfolienelements und nach innen mit einem der Längsränder des Dichtfolienstreifens verbunden.

Gemäß einer alternativen Ausführung der Dichtmittel zwischen dem Konzentrator-Kissen und dem unteren Längsträger ist als Verbindungselement ein Klemmteil zum Festklemmen eines der Längsränder des Bodenfolienelements und/oder als weiteres Verbindungselement ein weiteres Klemmteil zum Festklemmen eines der Längsränder des Dichtfolienstreifens vorgesehen. Bei dieser Ausführung sind die Längsränder des Bodenfolienelements benachbart der unteren Durchtrittsöffnung für den oberen Längsträger zwischen Sitzflächen des Klemmteils bzw. des Profilelements eingeklemmt. Durch die Klemmung wird das Bodenfolienelement im Wesentlichen luftdicht an den unteren Längsträger angeschlossen. Entsprechend kann der Dichtfolienstreifen zwischen den Längsgurten des unteren Längsträgers mittels weiterer Klemmteile an den Längsgurten des unteren Längsträgers im Wesentlichen luftdicht festgeklemmt sein.

Gemäß einer weitere Ausführungsform ist als Verbindungselement ein Reißverschlusselement zur Verbindung mit einem entsprechenden Reißverschlusselement an einem der Längsränder des Bodenfolienelements und/oder als weiteres Verbindungselement ein weiteres Reißverschlusselement zur Verbindung mit einem entsprechenden weiteren Reißverschlusselement des Dichtfolienstreifens vorgesehen.

Zur Ausbildung der Hohlkammer des Spannfolienelements ist gemäß einer bevorzugten Ausführung vorgesehen, dass die Profilelemente an den Längsgurten des unteren Längsträgers jeweils mit einem Befestigungselement zur im Wesentlichen luftdichten Verbindung mit einem die Hohlkammer des Spannfolienelements begrenzenden Folienstreifen verbunden sind. Bei dieser Ausführung sind an den Längsgurten des unteren Längsträgers nicht nur die Verbindungselemente für das Bodenfolienelement und den Dichtfolienstreifen, sondern zudem die Befestigungselemente für zwei Folienstreifen des Spannfolienelements vorgesehen, welche die Hohlkammer des Spannfolienelements begrenzen, mit welchem die Wölbung der Reflektorfolie eingestellt wird. Demnach wird die Hohlkammer des Spannfolienelements bei dieser Ausführung durch die beiden Folienstreifen des Spannfolienelements und den Dichtfolienstreifen zwischen den Längsgurten des unteren Längsträgers begrenzt. Um einen Luftaustritt von der Hohlkammer des Spannfolienelements in den unteren Hohlraum des Konzentrator-Kissens im Wesentlichen vollständig zu unterbinden, sind die Folienstreifen des Spannfolienelements innerhalb des unteren Hohlraums des Konzentrator-Kissens im Wesentlichen luftdicht mit den Befestigungselementen an den Längsgurten des unteren Längsträgers verbunden. Die Befestigungselemente für die Folienstreifen des Spannfolienelements können im Wesentlichen ident wie die Verbindungselemente für das Bodenfolienelement bzw. den Dichtfolienstreifen ausgebildet sein. Als Befestigungselemente sind bevorzugt in Längsrichtung des unteren Längsträgers erstreckte Kederschienen vorgesehen, in welchen entsprechende Kederelemente an den unteren Längsrändern der Folienstreifen des Spannfolienelements angeordnet sind.

Gemäß einer alternativen bevorzugten Ausführung weist der untere Längsträger im Wesentlichen mittig zwischen den Längsgurten ein oberseitiges Befestigungselement zur Befestigung des Spannfolienelements auf. Bei dieser Ausführung erstreckt sich das Befestigungselement für das Spannfolienelement in Längsrichtung des Konzentrator-Kissens im Wesentlichen in gleichen Abständen zu den Längsgurten des unteren Längsträgers. Zur oberseitigen Befestigung an dem unteren Längsträger weist das Spannfolienelement vorzugsweise einen im aufgeblasenen Zustand des Konzentrator-Kissens flachen bzw. ebenen Befestigungsabschnitt auf. Dies soll bedeuten, dass die Querschnittsfläche des Spannfolienelements im Bereich des Befestigungsabschnitts im Wesentlichen der Wandstärke des Befestigungsabschnitts entspricht. Bei dieser Ausführung ist es günstig, wenn das Spannfolienelement mittels des Befestigungsabschnitts im Wesentlichen luftdicht mit dem Befestigungselement verbunden ist. Zu diesem Zweck kann das oberseitige Befestigungselement für das Spannfolienelement im Wesentlichen ident wie die Verbindungselemente für das Bodenfolienelement bzw. den Dichtfolienstreifen ausgebildet sein. Demnach kann als oberseitiges Befestigungselement insbesondere eine in Längsrichtung des unteren Längsträgers erstreckte Kederschiene vorgesehen sein, in welcher ein entsprechendes Kederelement am unteren Längsrand des Spannfolienelements angeordnet ist.

Gemäß einer besonders bevorzugten Ausführung weist die Halteeinrichtung einen in Längsrichtung des Konzentrator-Kissens erstreckten oberen Längsträger auf, wobei der obere Längsträger im Wesentlichen luftdicht mit den eine obere Durchtrittsöffnung des Konzentrator-Kissens begrenzenden Längsrändern des Deckfolienelements des Konzentrator-Kissens verbunden ist. Bei dieser Ausführung ist das langgestreckte, im Querschnitt vorzugsweise im Wesentlichen zylindrische Konzentrator-Kissen an der Oberseite an dem oberen Längsträger und an der Unterseite an dem unteren Längsträger befestigt. Der obere Längsträger ist hierbei zur Aufhängung des Absorbers eingerichtet, welcher im aufgeblasenen Betriebszustand innerhalb des oberen Hohlraums des Konzentrator-Kissens angeordnet ist. Der untere Längsträger ist, wie zuvor beschrieben wurde, einerseits zur Abstützung des Konzentrator-Kissens an der Unterseite und andererseits zur Befestigung des Spannelementes eingerichtet, mit welchem die Wölbung der Reflektorfolie einstellbar ist. Vorzugsweise ist das Konzentrator-Kissen ausschließlich an dem oberen und dem unteren Längsträger angebracht. Bei umfassenden Tests hat es sich als besonders vorteilhaft herausgestellt, wenn die beiden Lagerstellen für das Konzentrator-Kissen, d.h. der obere und der untere Längsträger, geometrisch möglichst weit weg von der Reflektor- bzw. Spiegelfolie angeordnet sind. Erfindungsgemäß wird das Konzentrator-Kissen daher an dessen Oberseite und an dessen Unterseite fixiert. Demgegenüber ist es vorteilhaft, wenn die Längsseiten des Konzentrator-Kissens, insbesondere im Bereich der Längsränder der Reflektorfolie, in radialer Richtung ausdehnbar angeordnet sind. Dadurch kann eine thermische Ausdehnung des Konzentrator-Kissens insbesondere im Bereich der Reflektorfolie freigegeben werden, wodurch die konkave Geometrie der Reflektorfolie für die Bündelung der Sonnenstrahlung im Absorber präzise eingehalten wird. Durch die ober- und unterseitige Anbindung des Konzentrator-Kissens an die Längsträger kann die Form des Konzentrator-Kissens auch bei starken äußeren Lasten und unabhängig vom Schwenkwinkel des Konzentrator-Kissens zuverlässig beibehalten werden. Bei dieser Ausführung kann insbesondere auf die beim Stand der Technik vorgesehenen lokalen Halteplatten zwischen der Schwenkeinrichtung und dem Konzentrator verzichtet werden. Die Ausgestaltung zeichnet sich einerseits dadurch aus, dass Windlasten über die Längsträger effizient abgetragen werden können. Andererseits ist vorteilhaft, dass sich die Verschwenkung des Konzentrator-Kissens durch die Halterung an den Längsträgern nicht wesentlich auf die Wölbung der Reflektorfolie zwischen dem oberen und unteren Hohlraum des Konzentrator-Kissens auswirkt.

Der obere Längsträger ist vorzugsweise wie der untere Längsträger ausgeführt. Die vorstehend beschriebenen Ausführungsvarianten des unteren Längsträgers und dessen Befestigung an der unteren Durchtrittsöffnung können daher entsprechend bei dem oberen Längsträger an der oberen Durchtrittsöffnung des Konzentrator-Kissens verwirklicht sein. Demnach können die Längsgurte des oberen Längsträgers einerseits im Wesentlichen luftdicht mit den an die obere Durchtrittsöffnung angrenzenden Längsrändern des Deckfolienelements verbunden sein. Andererseits können die Längsgurte des oberen Längsträgers im Wesentlichen luftdicht mit den seitlichen Randbereichen eines oberen Dichtfolienstreifens verbunden sein, welcher sich zwischen den Längsgurten des oberen Längsträgers bevorzugt im Wesentlichen über die gesamte Breite der oberen Durchtrittsöffnung erstreckt.

Um die Nachführung des Konzentrator-Kissens an den Sonnenlauf, d.h. an die momentane Position der Sonne über dem Standort, zu ermöglichen, ist es günstig, wenn die Schwenkeinrichtung zumindest ein das Konzentrator-Kissen in dessen Umfangsrichtung umschließendes Schwenkelement, insbesondere einen Schwenkring, aufweist, an dessen Innenseite der untere Längsträger, vorzugsweise auch der obere Längsträger, der Halteeinrichtung befestigt sind. Bevorzugt ist an der dem Konzentrator-Kissen zugewandten Innenseite des Schwenkelements einerseits der untere Längsträger, an welchem das Spannelement für die Reflektorfolie befestigt ist, und andererseits der obere Längsträger montiert, an welchem der Absorber für die Sonnenstrahlung aufgehängt ist. Solche Schwenkringe sind im Stand der Technik, vgl. z.B. die WO 2012/145774, an sich bekannt. Im Unterschied dazu wird die Schwenkbewegung des Schwenkelements bei der vorliegenden Ausführung einerseits über den oberen Längsträger an der Oberseite des Konzentrator-Kissens und andererseits über den unteren Längsträger an der Unterseite des Konzentrator-Kissens auf das Konzentrator-Kissen übertragen. Auf diese Weise kann die Geometrie der Reflektorfolie unabhängig vom Schwenkwinkel des Konzentrator-Kissens zuverlässig gewährleistet werden. Vorzugsweise sind keine weiteren Verbindungen zwischen der Schwenkeinrichtung und dem Konzentrator-Kissen vorgesehen. Demnach sind die in Längsrichtung erstreckten Verbindungen zwischen dem oberen bzw. unteren Längsträger und dem Konzentrator-Kissen vorzugsweise die einzigen Verbindungen zwischen der Schwenkeinrichtung und der Halteeinrichtung für das Konzentrator-Kissen.

Zur Abtragung auf das Konzentrator-Kissen einwirkender Lasten, beispielsweise Windlasten, ist es günstig, wenn mehrere in Längsrichtung des Konzentrator-Kissens beabstandete Schwenkelemente, insbesondere Schwenkringe, vorgesehen sind, an deren Innenseite der obere Längsträger und der untere Längsträger der Halteeinrichtung befestigt sind. Demnach sind die Längsträger in festgelegten Abständen an den Schwenkelementen befestigt, wobei das Konzentrator-Kissen durch die einzelnen Schwenkelemente durchtritt.

Um die Geometrie des Konzentrator-Kissens und die Anordnung des Absorbers im Fokusbereich der Reflektorfolie auch bei hohen äußeren Lasten zu gewährleisten, ist es günstig, wenn der obere Längsträger und/oder der untere Längsträger zumindest über mehr als die Hälfte der Länge des Konzentrator-Kissens erstreckt ist, wobei sich der obere Längsträger und/oder der untere Längsträger bevorzugt zwischen einem vorderen Endstück und einem hinteren Endstück an den Stirnseiten des Konzentrator-Kissens erstreckt. Besonders günstig ist es daher, wenn sich der obere Längsträger und der untere Längsträger über im Wesentlichen die gesamte Länge des Konzentrator-Kissens erstrecken. Bei dieser Ausführung enden die Längsträger benachbart der Endstücke des Konzentrator-Kissens, mit welchen der obere und der untere Hohlraum des Konzentrator-Kissens im Wesentlichen luftdicht verschlossen werden. Die Durchtrittsöffnungen des Konzentrator-Kissens sind entsprechend den Längsträgern in Längsrichtung des Konzentrator-Kissens erstreckt.

Zur Verankerung der Schwenkeinrichtung an einer Bodenstruktur kann eine Verankerungseinrichtung vorgesehen sein, welche vorzugsweise eine Aufhängeeinrichtung zum Aufhängen der Schwenkeinrichtung aufweist. Die Schwenkeinrichtung ist zum Verschwenken des Konzentrator-Kissens, vorzugsweise um dessen Längsachse, eingerichtet. Bei dieser Ausführung wird die Schwenkeinrichtung, an welcher im Betriebszustand das Konzentrator-Kissen befestigt ist, vorzugsweise im Wesentlichen vollständig durch die Aufhängeeinrichtung getragen. Für die Zwecke dieser Offenbarung bedeutet die Aufhängung der Schwenkeinrichtung, dass die Befestigungsstellen zwischen der Aufhängeeinrichtung und der Schwenkeinrichtung ausschließlich oberhalb einer den Massenmittelpunkt der Schwenkeinrichtung aufweisenden Ebene angeordnet sind. Die Begriffe "oben" und "unten" beziehen sich hierbei auf die Betriebsstellung der Vorrichtung. Diese Ausführung hat insbesondere den Vorteil, dass die äußeren Lasten, wie Windkräfte, besonders effizient aufgefangen und an ein Fundament am Standort abgeleitet werden können. Vorteilhaft ist insbesondere, dass der kissen- bzw. schlauchförmige Konzentrator weitgehend frei von äußeren Einflüssen gehalten wird. Dadurch kann die konkave Wölbung der Reflektorfolie zwischen dem oberen und dem unteren Hohlraum des Konzentrators präzise eingehalten werden, so dass die Fokussierung der Sonnenstrahlung am Absorber mit hohem Wirkungsgrad erfolgt. Weiters ist diese Ausgestaltung dahingehend vorteilhaft, dass die Schwenkeinrichtung schlanker als beim Stand der Technik ausgeführt werden kann. Somit können Materialkosten eingespart werden. Weiters wird der Verschattungsgrad der Reflektorfolie verringert, wodurch der Wirkungsgrad weiter gesteigert werden kann.

Zum Aufhängen der Schwenkeinrichtung für das Konzentrator-Kissen ist es günstig, wenn die Aufhängeeinrichtung zumindest einen Trägerrahmen, vorzugsweise mehrere in Längsrichtung des Konzentrator-Kissens beabstandet angeordnete Trägerrahmen, aufweist, wobei der zumindest eine Trägerrahmen jeweils zumindest ein erstes Rahmenelement auf der einen Längsseite des Konzentrator-Kissens und ein zweites Rahmenelement auf der anderen Längsseite des Konzentrator-Kissens aufweist. Vorteilhafterweise kann der Trägerrahmen auf einfache Weise aus Standardprofilen hergestellt werden, wodurch schon bei geringen Stückzahlen erhebliche Kostenvorteile erzielt werden.

Um die Stabilität der Aufhängeeinrichtung zu erhöhen, ist es von Vorteil, wenn der Trägerrahmen ein drittes Rahmenelement oberhalb des Konzentrator-Kissens aufweist, welches das erste Rahmenelement auf der einen Längsseite des Konzentrator-Kissens mit dem zweiten Rahmenelement auf der anderen Längsseite des Konzentrator-Kissens verbindet. Bei dieser Ausführung erstreckt sich der Trägerrahmen daher von der einen Längsseite des Konzentrator-Kissens über die Oberseite des Konzentrator-Kissens hinweg auf die andere Längsseite des Konzentrator-Kissens, so dass das Konzentrator-Kissen im montierten Betriebszustand vollständig innerhalb des Trägerrahmens angeordnet ist. Die Schwenkeinrichtung ist bevorzugt an der Unterseite des Trägerrahmens aufgehängt. Demnach wird die Schwenkeinrichtung vorzugsweise im Wesentlichen vollständig von dem Trägerrahmen eingerahmt. Diese Ausführung hat sich als besonders günstig erwiesen, um die im Betrieb auftretenden Kräfte, beispielsweise Windkräfte, aufzunehmen.

Zur Nachführung des Konzentrator-Kissens an den Sonnenlauf ist es vorteilhaft, wenn zwischen der Aufhängeeinrichtung und der Schwenkeinrichtung eine Schwenklagereinrichtung, insbesondere eine Rollenlagerung, vorgesehen ist. Solche Rollenlagerungen sind im Stand der Technik, vgl. z.B. die WO 2012/145774, an sich bekannt. Die Rollenlagerung weist Rollenelemente auf, welche insbesondere an einer Laufkatze vorgesehen sind. Die Rollenelemente sind mit einem Antrieb verbunden, wobei die Rollenelemente im angetriebenen Zustand durch einen Reibschluss beim Abrollen auf der Schwenkeinrichtung ein Drehmoment erzeugen, welches eine Verschwenkung der Schwenkeinrichtung mit dem Konzentrator-Kissen um eine Achse, insbesondere um die Längsachse des Konzentrator-Kissens, bewirkt.

Die Erfindung wird nachstehend anhand von in der Zeichnung dargestellten Ausführungsbeispielen, auf die sie jedoch nicht beschränkt sein soll, noch weiter erläutert. In der Zeichnung zeigt:
Fig. 1a eine schaubildliche Ansicht einer erfindungsgemäßen Vorrichtung zur Konzentration von Sonnenstrahlung in einem Absorber (vgl. Fig. 2), bei welcher mehrere Schwenkringe zum Verschwenken eines Konzentrator-Kissens (vgl. Fig. 1b, 1c und Fig. 2) an einem Trägerrahmen aufgehängt sind;
Fig. 1b eine weitere schaubildliche Ansicht der erfindungsgemäßen Vorrichtung gemäß Fig. 1a, wobei zusätzlich das Konzentrator-Kissen (ohne dessen Endstücke) ersichtlich ist;
Fig. 1c eine weitere schaubildliche Ansicht der erfindungsgemäßen Vorrichtung gemäß Fig. 1b, wobei das Konzentrator-Kissen im Betriebszustand einschließlich dessen Endstücke ersichtlich ist;
Fig. 2 eine Querschnittsansicht der Vorrichtung gemäß Fig. 1, wobei das Konzentrator-Kissen im montierten Zustand ersichtlich ist;
Fig. 3 eine schaubildliche Detailansicht eines Ausschnitts der Vorrichtung gemäß Fig. 1, 2, wobei die Befestigung eines das Konzentrator-Kissen tragenden oberen Längsträgers am Schwenkring ersichtlich ist;

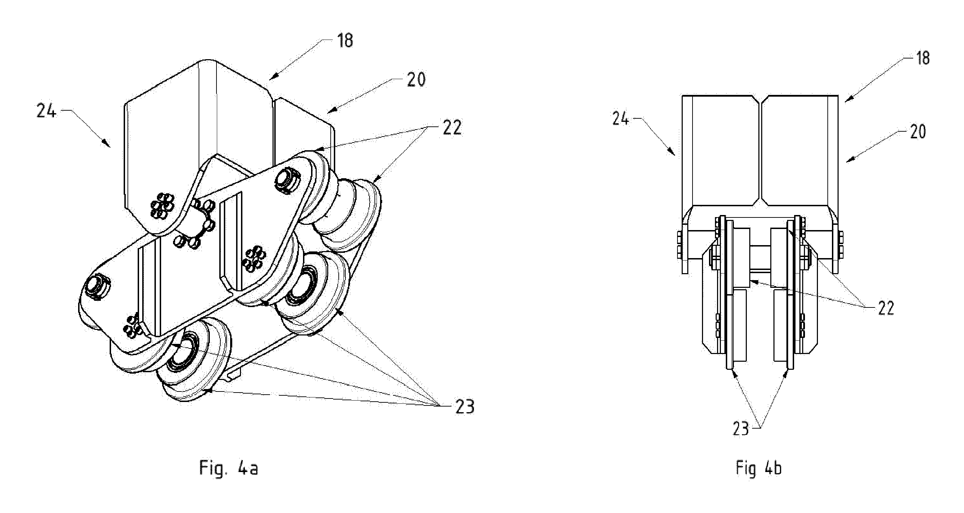

Fig. 4a und Fig. 4b je eine schaubildliche Ansicht einer Schwenklagereinrichtung zum Verschwenken der Schwenkeinrichtung;
Fig. 5 eine schaubildliche Detailansicht eines Ausschnitts der Vorrichtung gemäß Fig. 1 bis 3, wobei die Befestigung des Konzentrator-Kissens an dem oberen Längsträger ersichtlich ist;
Fig. 6a das in Fig. 5 mit einem Kreis veranschaulichte Detail A;
Fig. 6b eine Fig. 6a entsprechende Detailansicht mit einer alternativen Ausführung des oberen Längsträgers;
Fig. 7a und Fig. 7b jeweils einen Ausschnitt einer alternativen erfindungsgemäßen Ausführung der Vorrichtung, bei welcher ein luftdichter Reißverschluss zur Anbindung des Konzentrator-Kissens an den oberen Längsträger vorgesehen ist;
Fig. 8a und Fig. 8b jeweils einen Ausschnitt einer weiteren alternativen erfindungsgemäßen Ausführung der Vorrichtung, bei welcher die Längsränder des Konzentrator-Kissens an den oberen Längsgurten des Längsträgers festklemmbar sind, wobei in Fig. 8a die Freigabestellung und in Fig. 8b die Klemmstellung dargestellt ist;
Fig. 9 eine vergrößerte schaubildliche Ansicht eines der Schwenkringe der Konzentrator-Vorrichtung gemäß Fig. 1 bis 3, wobei die Längsträger in der Höhe verstellbar an dem Schwenkring montiert sind;
Fig. 10a eine vergrößerte Darstellung des in Fig. 9 mit einem Kreis veranschaulichten Details B, wobei die Verstelleinrichtung mittels einer Gewindestange auf einen größeren Abstand zwischen dem oberen Längsträger und dem Schwenkring eingestellt ist;
Fig. 10b eine Detailansicht entsprechend Fig. 10a, wobei der Längsträger durch Verstellung der Gewindestange näher an den Schwenkring herangeführt wurde;
Fig. 11a bis 11d Detailansichten einer alternativen Ausführung der Verstelleinrichtung, bei welcher Kniehebelelemente zwischen dem Schwenkring und dem oberen Längsträger zur Abstandsjustierung vorgesehen sind, wobei die Kniehebelelemente in Fig. 11a, 11c auf einen größeren Abstand zwischen dem Schwenkring und dem oberen Längsträger als in Fig. 11b, 11d eingestellt sind;
Fig. 12a bis 12d Detailansichten einer alternativen Ausführung der Verstelleinrichtung, bei welcher die Kniehebelelemente gegen die Kraft eines Federelements selbständig auf den passenden Abstand zwischen dem Schwenkring und dem oberen Längsträger nachführbar sind, wobei die Kniehebelelemente in Fig. 12a, 12c auf einen größeren Abstand zwischen dem Schwenkring und dem oberen Längsträger als in Fig. 12b, 12d eingestellt sind;
Fig. 13a, 13b schematische Querschnittsansichten einer weiteren erfindungsgemäßen Ausführungsform der Vorrichtung, bei welcher eine Einstelleinrichtung zur Einstellung der Wölbung der Reflektorfolie vorgesehen ist, welche ein Spannfolienelement mit einer Hohlkammer zwischen dem unteren Längsträger der Halteeinrichtung und der Reflektorfolie aufweist, wobei in Fig. 13a der unaufgeblasene und in Fig. 13b der aufgeblasene Zustand des Spannfolienelements dargestellt ist;
Fig. 14 das in Fig. 13a mit einem Kreis veranschaulichte Detail A in demgegenüber vergrößertem Maßstab;
Fig. 15 das in Fig. 13a mit einem Kreis veranschaulichte Detail B in demgegenüber vergrößertem Maßstab;
Fig. 16 eine schematische Querschnittsansicht einer weiteren erfindungsgemäßen Ausführungsform der Vorrichtung mit einer alternativen Einstelleinrichtung;
Fig. 17 eine schematische Querschnittsansicht einer weiteren erfindungsgemäßen Ausführungsform der Vorrichtung mit einer weiteren alternativen Einstelleinrichtung; und
Fig. 18 das in Fig. 17 mit einem Kreis veranschaulichte Detail C in demgegenüber vergrößertem Maßstab.

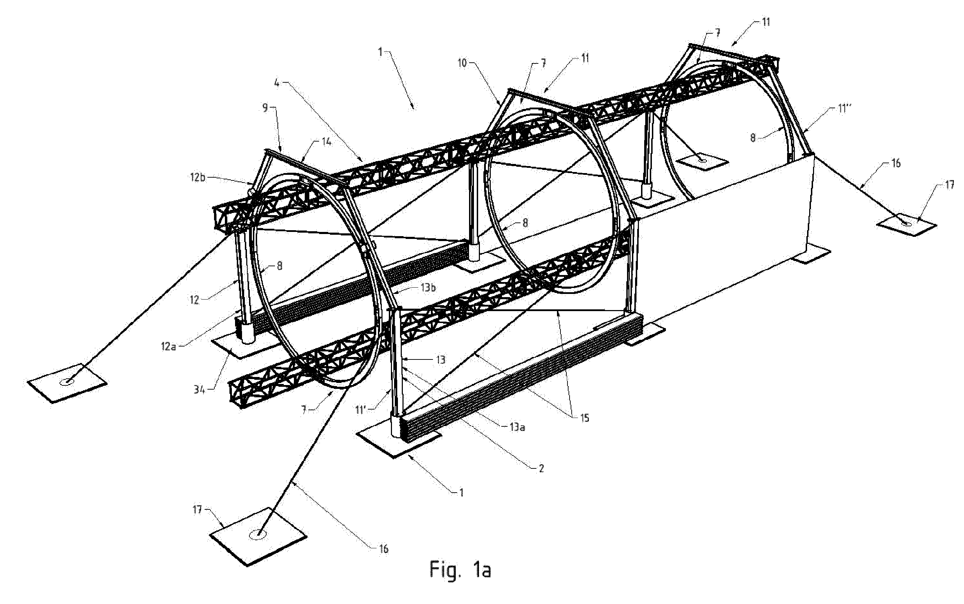

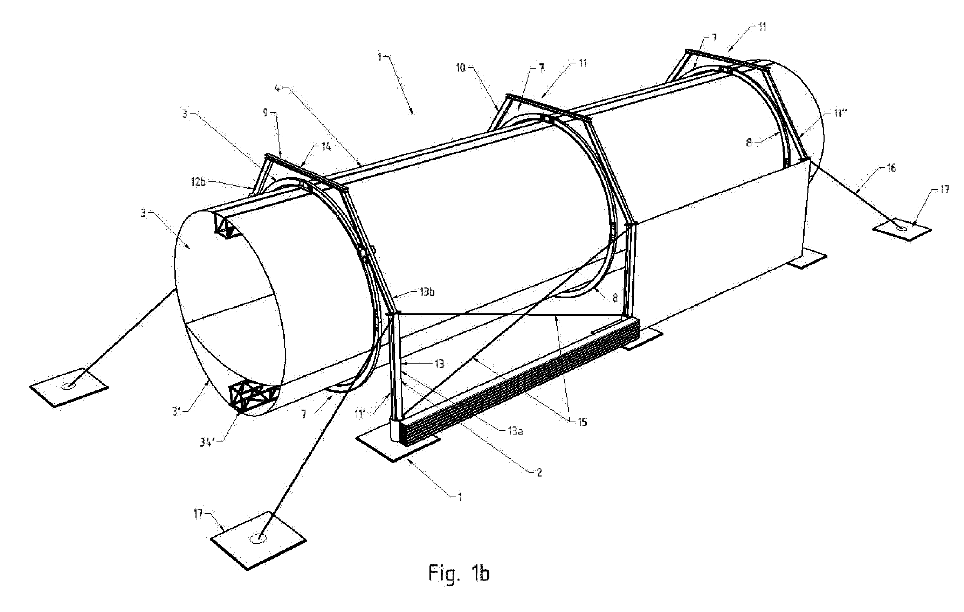

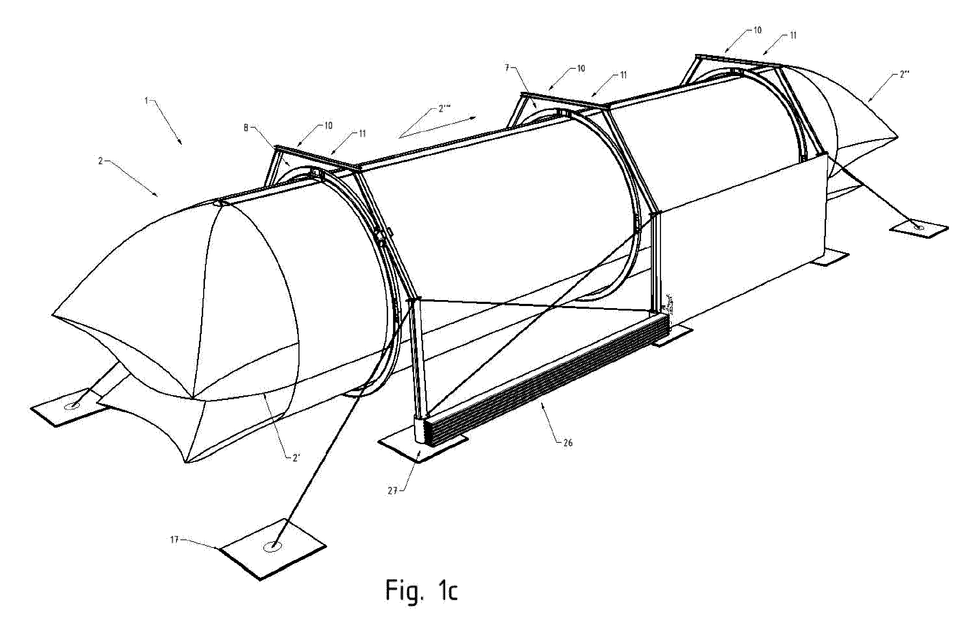

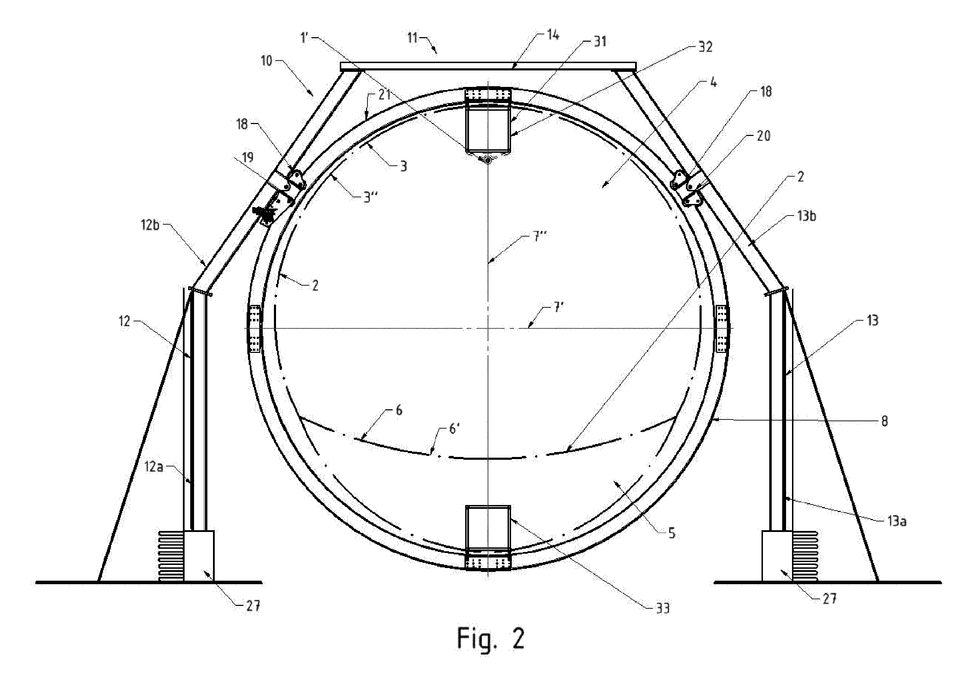

In Fig. 1 ist eine Vorrichtung 1 zur Konzentration von Sonnenstrahlung in einem Absorber 1' (vgl. Fig. 2) gezeigt. Die Vorrichtung 1 weist ein aufblasbares Konzentrator-Kissen 2 (vgl. Fig. 1b, 1c und Fig. 2) auf. Das Konzentrator-Kissen 2 weist ein Deckfolienelement 3" mit einem lichtdurchlässigen Eintrittsfenster 3 zum Einkoppeln von Sonnenstrahlung und eine das Konzentrator-Kissen 2 in zumindest zwei Hohlräume 4, 5 unterteilende, im Betriebszustand gekrümmte Reflektorfolie 6 zum Konzentrieren der Sonnenstrahlung in einem Absorber 1' auf. Die Reflektorfolie 6 weist eine Spiegelfläche 6' auf, welche die eingekoppelte Sonnenstrahlung in Richtung des Absorbers 1' bündelt. Der Absorber 1', worunter auch ein Solarpaneel zu verstehen ist, befindet sich im Fokusbereich der Spiegelfläche 6' innerhalb des oberen, an das Eintrittsfenster 3 anschließenden Hohlraums 4 des Konzentrator-Kissens 2. Als Absorber 1' kann insbesondere ein mediendurchströmtes Rohr oder ein Photovoltaikelement vorgesehen sein. Der Konzentrator kann somit sowohl für konzentrierte Photovoltaik (CPV = Concentrated Photovoltaics) als auch für konzentrierte Solarthermie (CSP = Thermal Concentrated Solar Power) verwendet werden. Im Betrieb des Konzentrators wird in den luftbefüllten Hohlräumen 4, 5 ein Druckunterschied ausgebildet, wodurch die Reflektorfolie 6 gleichmäßig konkav gewölbt wird, so dass die eingekoppelte Sonnenstrahlung von der Spiegelfläche 6' in den Absorber 1' fokussiert wird. Das Konzentrator-Kissen 2 ist in dem mit Druckluft in den Hohlräumen 4, 5 befüllten Zustand grundsätzlich selbsttragend ausgelegt, so dass gegenüber herkömmlichen Solarkonzentratoren ein erheblich niedrigeres Gewicht realisierbar ist. Wie im Stand der Technik bekannt, ist das Konzentrator-Kissen 2 aus einzelnen dünnwandigen (Kunststoff-)Folien aufgebaut; für das Eintrittsfenster 3 ist eine transparente Folie vorgesehen.

Wie aus Fig. 1 weiters ersichtlich, ist eine Schwenkeinrichtung 7 zum Verschwenken des Konzentrator-Kissens 2 vorgesehen. Die Schwenkeinrichtung 7 weist mehrere Schwenkelemente in Form von Schwenkringen 8 auf, welche das Konzentrator-Kissen 2 in Umfangsrichtung umschließen. Die Schwenkringe 8 der Schwenkeinrichtung 7 bilden zusammen ein Nachführungssystem, um das Konzentrator-Kissen 2 im Betrieb dem Sonnenlauf nachzuführen. Hierfür ist die Schwenkeinrichtung 7 dazu eingerichtet, das Konzentrator-Kissen 2 um zumindest eine Achse des Konzentrator-Kissens 2, hier speziell die Längsachse des Konzentrator-Kissens 2, schwenkbar zu lagern.

Wie aus Fig. 1, 2 weiters ersichtlich, ist zudem eine Verankerungseinrichtung 9 für die Schwenkeinrichtung 7 vorgesehen, wobei die Verankerungseinrichtung 9 in der gezeigten Ausführung eine Aufhängeeinrichtung 10 zum Aufhängen der Schwenkringe 8 der Schwenkeinrichtung 7 aufweist. Die Aufhängeeinrichtung 10 weist mehrere in Längsrichtung des Konzentrator-Kissens 2 beabstandet angeordnete Trägerrahmen 11 auf, welche Befestigungsstellen für die Schwenkringe 8 der Schwenkeinrichtung 7 aufweisen. Die Befestigungsstellen sind oberhalb einer den Massenmittelpunkt aufweisenden Ebene 7' (vgl. Fig. 2) der Schwenkringe 8 angeordnet. Jeder Trägerrahmen 11 weist ein erstes Rahmenelement 12 auf der einen Längsseite des Konzentrator-Kissens 2 und ein zweites Rahmenelement 13 auf der anderen Längsseite des Konzentrator-Kissens 2 auf. Darüber hinaus weist der Trägerrahmen 11 ein drittes Rahmenelement 14 oberhalb der Schwenkeinrichtung 7 mit dem Konzentrator-Kissen 2 auf. Das erste Rahmenelement 12 auf der einen Längsseite des Konzentrator-Kissens 2 ist über das dritte Rahmenelement 14 mit dem zweiten Rahmenelement 13 auf der anderen Längsseite des Konzentrator-Kissens 2 verbunden. Demnach erstreckt sich der Trägerrahmen 11 bogenförmig von der einen Längsseite des Konzentrator-Kissens 2 über das Konzentrator-Kissen 2 hinweg auf die andere Längsseite des Konzentrator-Kissens 2.

Wie aus Fig. 1, 2 weiters ersichtlich, bestehen das erste Rahmenelement 12 und das zweite Rahmenelement 13 jeweils aus einem ersten geraden bzw. linearen Rahmenteil 12a, 13a und einem zweiten geraden bzw. linearen Rahmenteil 12b, 13b. Das erste Rahmenteil 12a, 13a ist im Betriebszustand im Wesentlichen senkrecht angeordnet, wobei das untere Ende des ersten Rahmenteils 12a, 13a in einem Sockelelement 27 montiert ist. Das zweite Rahmenteil 12b, 13b ist vom oberen Ende des ersten Rahmenteils 12a, 13a nach innen, zum Konzentrator-Kissen 2 hin abgewinkelt.

Wie aus Fig. 1, 2 weiters ersichtlich, sind das erste Rahmenelement 12, das zweite Rahmenelement 13 und das dritte Rahmenelement 14 als langestreckte Profilelemente ausgebildet, welche in der gezeigten Ausführungsform einen I-förmigen Querschnitt aufweisen. Die Rahmenelemente 12, 13, 14 sind in einer Ebene im Wesentlichen senkrecht zur Längsrichtung des Konzentrator-Kissens 2 angeordnet.

Wie aus Fig. 1 weiters ersichtlich, weist die Aufhängeeinrichtung 10 mehrere, in der gezeigten Ausführung drei, Trägerrahmen 11 auf, welche über mehrere Spannelemente 15 in Form von Seilelementen miteinander verbunden sind. Die Anzahl der Trägerrahmen 11 hängt von der Länge des Konzentrator-Kissens 2 ab. Die Trägerrahmen 11 tragen jeweils einen Schwenkring 8, welcher das Konzentrator-Kissen 2 umgibt. In der gezeigten Ausführung sind einerseits die ersten Rahmenelemente 12 der Trägerrahmen 11 auf der einen Längsseite des Konzentrator-Kissens 2 über Spannelemente 15 miteinander verspannt, andererseits sind Spannelemente 15 zwischen den zweiten Rahmenelementen 13 der Trägerrahmen 11 auf der anderen Längsseite des Konzentrator-Kissens 2 vorgesehen. Auf beiden Längsseiten sind in der gezeigten Ausführung zwei Spannelemente 15 zwischen den Trägerrahmen 11 über Kreuz gespannt. Der vordere Trägerrahmen 11' und der hintere Trägerrahmen 11", jeweils bezogen auf die Längsrichtung des Konzentrator-Kissens 2, sind über weitere Spannelemente 16 auf beiden Längsseiten des Konzentrator-Kissens 2 an Bodenelementen 17 abgespannt. In der gezeigten Ausführung sind die weiteren Spannelemente 16 durch Endbereiche von Spannelementen 15 zwischen den Trägerrahmen 11 gebildet.

Wie aus Fig. 2 ersichtlich, sind zwischen der Aufhängeeinrichtung 10 und den Schwenkringen 8 der Schwenkeinrichtung 7 Schwenklagereinrichtungen 18 in Form von Rollenlagerungen 19, 20 vorgesehen. In der gezeigten Ausführung ist eine erste Rollenlagerung 19 an dem ersten Rahmenelement 12 der Aufhängeeinrichtung 10 und eine zweite Rollenlagerung 20 an dem zweiten Rahmenelement 13 der Aufhängeeinrichtung 10 vorgesehen.

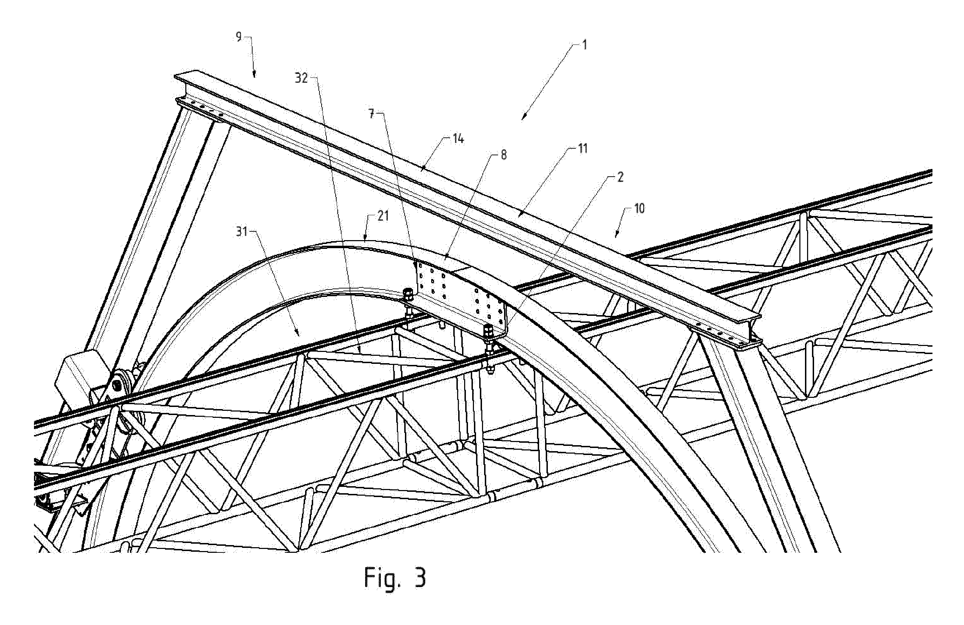

Wie aus Fig. 3 ersichtlich, weisen die Schwenkringe 8 jeweils ein Führungselement 21 für die Rollenlagerungen 19, 20 auf, wobei äußere Rollenelemente 22 auf der Oberseite des Führungselements 21 und innere Rollenelemente 23 auf der Innenseite des Führungselements 21 abrollen. Die Rollenelemente 22, 23 der Rollenlagerungen 19, 20 sind an Laufkatzen 24 montiert, welche an der Unterseite des Schwenkrings 8 befestigt sind. In der gezeigten Ausführung weisen die Schwenkringe 8 jeweils einen I-förmigen Querschnitt auf, wobei obere Flansche 25 der I-förmigen Schwenkringe 8 als Führungselemente 21 für die Rollenlagerungen 19, 20 ausgebildet sind.

Wie aus Fig. 1b ersichtlich, ist an der Aufhängeeinrichtung 10 eine Abdeckeinrichtung 26 vorgesehen, welche zwischen einer das Konzentrator-Kissen 2 zumindest teilweise abdeckenden Schutzstellung und einer das Konzentrator-Kissen 2 im Wesentlichen vollständig freiliegend anordnenden Staustellung überführbar ist. In der gezeigten Ausführung sind mehrere Abdeckeinrichtungen 26 jeweils zwischen zwei benachbarten Trägerrahmen 11 an den ersten Rahmenelementen 12 auf der einen Längsseite des Konzentrator-Kissens 2 bzw. an den ersten Rahmenelementen 13 auf der anderen Längsseite des Konzentrator-Kissens 2 befestigt. Die Abdeckeinrichtungen 26 bestehen in der gezeigten Ausführung aus mehreren miteinander verbundenen Lamellenelementen, welche zwischen einer zusammengeschobenen Stellung und einer auseinandergezogenen Stellung überführbar sind. In der Darstellung der Fig. 1b sind die beiden vorderen Abdeckeinrichtungen 26 in der zusammengeschobenen Stellung angeordnet, in welcher Windkräfte an der unteren Hälfte des Konzentrator-Kissens 2 angreifen können. Die beiden hinteren Abdeckeinrichtungen 26 sind hingegen in der auseinandergezogenen Stellung angeordnet, in welcher Windkräfte vom unteren Bereich des Konzentrator-Kissens 2 ferngehalten werden können. Die Abdeckeinrichtungen 26 können motorisch oder manuell zwischen der Staustellung und der Schutzstellung überführt werden.

Wie aus Fig. 1, 3 ersichtlich, weist die Vorrichtung 1 zudem eine Halteeinrichtung 31 für das Konzentrator-Kissen 2 auf, welche (jeweils bezogen auf die Betriebsstellung) einen oberen Längsträger 32 und einen unteren Längsträger 33 aufweist. Der obere Längsträger 32 trägt den Absorber 1' (vgl. Fig. 2), wohingegen der untere Längsträger 33 zur Ableitung von äußeren Lasten beiträgt. Beide Längsträger 32, 33 erstrecken sich in Längsrichtung des Konzentrator-Kissens 2 zwischen einem vorderen Endstück 2' und einem hinteren Endstück 2" an den Stirnseiten des Konzentrator-Kissens 2 (vgl. Fig. 1c).

Wie aus der Zeichnung weiters ersichtlich, ist der obere Längsträger 32 innenseitig am oberen Bereich der Schwenkringe 8 aufgehängt. Der untere Längsträger 33 ist ebenfalls innenseitig, aber im unteren Bereich der Schwenkringe 8 angebracht. Der obere Längsträger 32 ist mit einer der Sonnenstrahlung zugewandten Oberseite des Konzentrator-Kissens 2 verbunden. Der untere Längsträger 33 ist mit einer von der Sonnenstrahlung abgewandten Unterseite des Konzentrator-Kissens 2 verbunden. Die Längsträger 32, 33 sind in der gezeigten Ausführung als Fachwerkträger ausgeführt. Wie aus Fig. 2 ersichtlich, sind die Längsträger an einer den Mittelpunkt des Schwenkrings 8 aufweisenden Ebene 7" angeordnet.

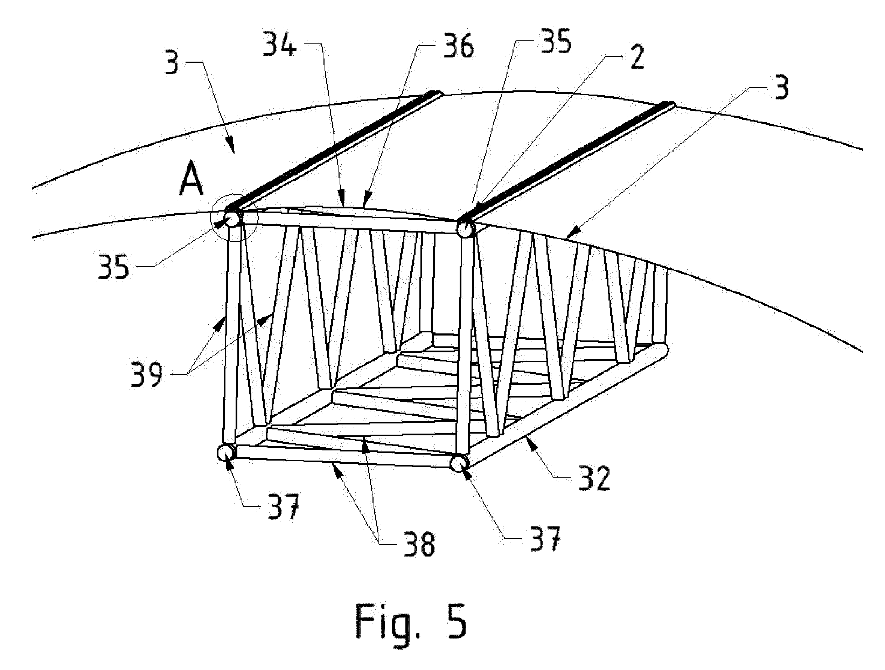

Wie aus Fig. 5 ersichtlich, ist der obere Längsträger 32 an einer oberen Durchtrittsöffnung 34 des Konzentrator-Kissens 2 angeordnet, welche nach allen Seiten hin im Wesentlichen luftdicht verschlossen ist. Zu diesem Zweck weist der obere Längsträger 32 zwei in Längsrichtung des Konzentrator-Kissens 2 (d.h. in Richtung dessen längerer Erstreckung) verlaufende Längsgurte 35 auf, welche jeweils im Wesentlichen luftdicht mit Längsrändern des Konzentrator-Kissens 2 beidseits der oberen Durchtrittsöffnung 34 des Deckfolienelements 3" verbunden sind. Der obere Längsträger 32 weist daher im Wesentlichen dieselbe Breite wie die Durchtrittsöffnung 34 des Konzentrator-Kissens 2 auf, welche sich in Längsrichtung des Konzentrator-Kissens 2 im Wesentlichen über dessen gesamte Länge erstreckt. Um einen Luftaustritt aus dem oberen Hohlraum 4 des Konzentrator-Kissens zu verhindern, ist zwischen den Längsgurten 35 ein Dichtfolienstreifen 36 angeordnet, mit welchem die obere Durchtrittsöffnung 34 des Konzentrator-Kissens 2 verschlossen wird. Der Dichtfolienstreifen 36 ist aus einem transparenten Kunststoffmaterial, insbesondere aus Ethylen-Tetrafluorethylen (ETFE), gefertigt.

Der untere Längsträger 33 ist an einer im Wesentlichen luftdicht verschlossenen unteren Durchtrittsöffnung 34' des Konzentrator-Kissens 2 angeordnet (vgl. Fig. 1b), wobei sich die untere Durchtrittsöffnung 34' an einem an den unteren Hohlraum 5 grenzenden Bodenfolienelement 3' des Konzentrator-Kissens 2 erstreckt. Die obere 34 und die untere Durchtrittsöffnungen 34' weisen dieselbe Längserstreckung wie der obere Längsträger 32 bzw. der untere Längsträger 33 auf. Der untere Längsträger 33 ist dabei im Wesentlichen ident wie der obere Längsträger 32 ausgebildet. Darüber hinaus ist die Verbindung zwischen dem unteren Längsträger 33 und dem Bodenfolienelement 3' entsprechend der Verbindung zwischen dem oberen Längsträger 33 und dem Deckfolienelement 3" gestaltet. Die nachstehenden Ausführungen zum oberen Längsträger 32 sind daher entsprechend für den unteren Längsträger 33 zu verstehen.

Wie aus Fig. 5 weiters ersichtlich, weist der obere Längsträger 32 zwei weitere Längsgurte 37 auf, welche parallel zu den Längsgurten 35 in Längsrichtung des Konzentrator-Kissens 2 erstreckt sind. Die weiteren Längsgurte 37 des oberen Längsträgers 32 sind innerhalb des oberen Hohlraums des Konzentrator-Kissens 2 angeordnet. Die Längsgurte 35 und die weiteren Längsgurte 37 des oberen Längsträgers 32 sind unter Ausbildung von Zwischenräumen über Füllstäbe 38 miteinander verbunden. Weitere Füllstäbe 39 sind zwischen den Längsgurten 35 und den weiteren Längsgurten 37 vorgesehen sind.

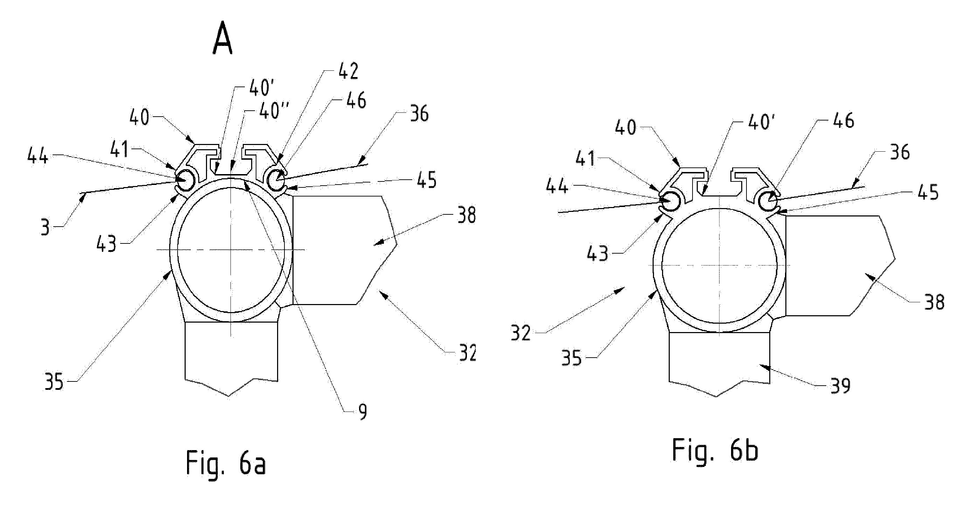

Wie aus Fig. 6 im Detail ersichtlich, sind an den Längsgurten 35 des oberen Längsträgers 32 Profilelemente 40 angeordnet. Jedes Profilelement 40 ist auf der einen Seite mit einem Verbindungselement 41 zur im Wesentlichen luftdichten Verbindung mit dem benachbarten Längsrand des Deckfolienelements 3" und auf der anderen Seite mit einem weiteren Verbindungselement 42 zur im Wesentlichen luftdichten Verbindung mit dem benachbarten Längsrand des Dichtfolienstreifens 36 verbunden. In Fig. 6b ist eine Ausführung gezeigt, bei welcher das Profilelement 40 als eigenes Bauteil auf der Oberseite des Längsgurtes 35 angebracht ist. Gemäß Fig. 6b ist das Profilelement 40 einteilig mit dem Längsgurt 35 des oberen Längsträgers 32 gebildet.

Wie aus Fig. 6 ersichtlich, sind bei dieser Ausführung an den Längsgurten 35 des oberen Längsträgers 32 Halteelemente 40' zur formschlüssigen Verbindung mit entsprechenden Halteelementen (nicht gezeigt) an der Schwenkeinrichtung 7 vorgesehen, um den oberen Längsträger 32 an der Schwenkeinrichtung 7 aufzuhängen. In der gezeigten Ausführung weist das Profilelement 40 zur Ausbildung der Halteelemente 40' in Längsrichtung des Konzentrator-Kissens 2 erstreckte Halteöffnungen 40" auf, in welchen die entsprechenden Halteelemente für die Anbindung der Schwenkeinrichtung aufgenommen sind.

In den Ausführungsvarianten der Fig. 5, 6 ist als Verbindungselement 41 eine Kederschiene 43 vorgesehen, in welcher ein Kederelement 44 am zugehörigen Längsrand des Deckfolienelements 3" dichtend aufgenommen ist. Entsprechend ist als weiteres Verbindungselement 42 eine weitere Kederschiene 45 vorgesehen, in welcher ein weiteres Kederelement 46 am zugehörigen Längsrand des Dichtfolienstreifens 36 dichtend aufgenommen ist.

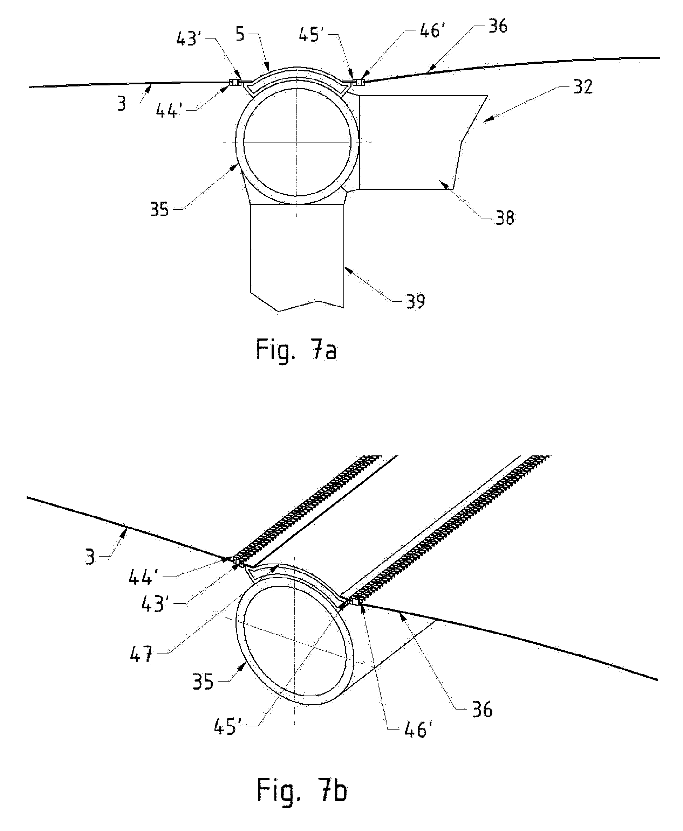

Fig. 7a, 7b zeigen eine alternative Ausführung der Verbindung zwischen dem oberen Längsträger 32 und dem Deckfolienelement 3''. Bei dieser Ausführung ist als Verbindungselement 41 ein Reißverschlusselement 43' zur Verbindung mit einem entsprechenden Reißverschlusselement 44' an einem der Längsränder des Deckfolienelements 3''. Entsprechend ist als weiteres Verbindungselement 42 ein weiteres Reißverschlusselement 45' zur Verbindung mit einem entsprechenden weiteren Reißverschlusselement 46' des Dichtfolienstreifens 36 vorgesehen. Die Reißverschlusselemente 43', 45' sind auf der Oberseite eines in Längsrichtung des Konzentrator-Kissens 2 erstreckten Profils 47 angeordnet, welches oberseitig an dem Längsgurt 35 des oberen Längsträgers 32 angebracht ist.

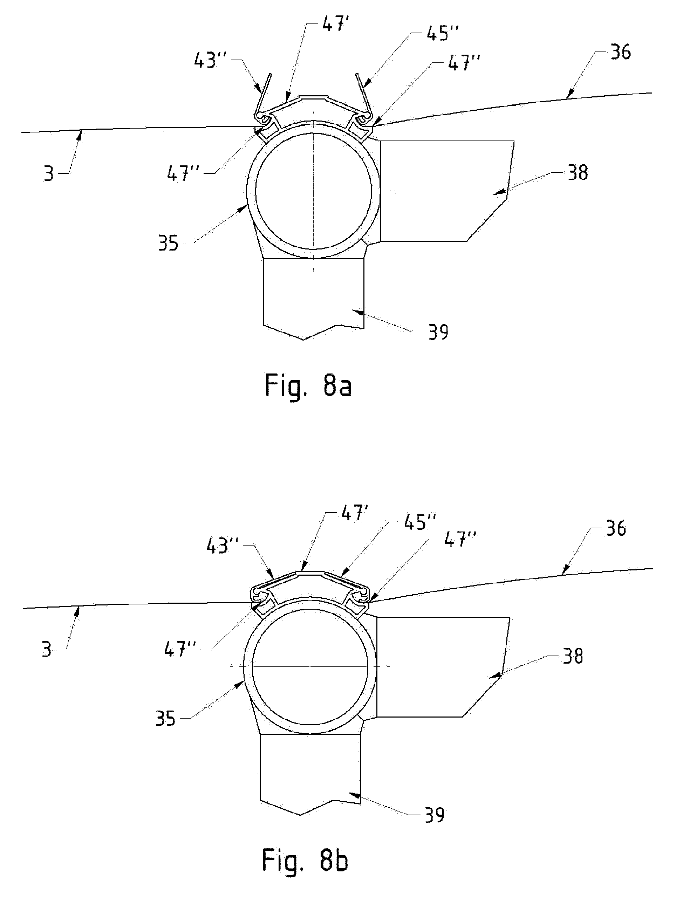

In Fig. 8 ist eine weitere alternative Ausführung gezeigt, bei welcher als Verbindungselement 41 ein Klemmteil 43" zum Festklemmen des zugehörigen Längsrandes des Deckfolienelements 3" vorgesehen ist. Entsprechend ist als weiteres Verbindungselement 42 ein weiteres Klemmteil 45" zum Festklemmen des zugehörigen Längsrandes des Dichtfolienstreifens 36 vorgesehen. Zu diesem Zweck ist ein in Längsrichtung des Konzentrator-Kissens 2 erstrecktes Profilteil 47' auf der Oberseite des Längsgurtes 35 vorgesehen. Das Profilteil 47' weist Lagerflächen 47" auf, welche mit dem Klemmteil 43" bzw. dem weiteren Klemmteil 45" zusammenwirken. Das Klemmteil 43" ist zwischen einer den Längsrand des Deckfolienelements 3" freigebenden Stellung (vgl. Fig. 8a) und einer den Längsrand des Deckfolienelements 3" festklemmenden Stellung (vgl. Fig. 8b) verschwenkbar. Entsprechend ist das weitere Klemmteil 45" zwischen einer den Längsrand des Dichtfolienstreifens 36 freigebenden Stellung (vgl. Fig. 8a) und einer den Längsrand des Dichtfolienstreifens 36 festklemmenden Stellung (vgl. Fig. 8b) verschwenkbar.

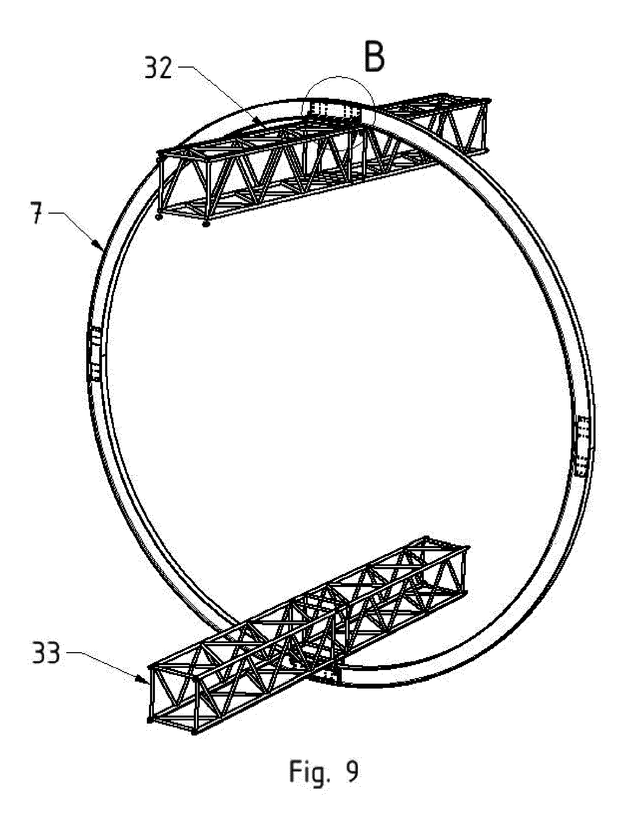

Wie aus Fig. 9 ersichtlich, ist zwischen dem oberen Längsträger 32, der Halteeinrichtung 31 und der Schwenkeinrichtung 7 eine Verstelleinrichtung 48 vorgesehen, mit welcher der Abstand zwischen dem oberen Längsträger 32 und der Schwenkeinrichtung 7 einstellbar ist. Eine weitere Verstelleinrichtung ist zwischen dem unteren Längsträger 32 und der Schwenkeinrichtung 7 vorgesehen, wobei sich nachfolgende Erläuterungen zur Verstelleinrichtung 48 für den oberen Längsträger 32 entsprechend auf die Verstellung des unteren Längsträgers 33 beziehen sollen. Die Verstelleinrichtung 48 ist einerseits mit beiden Längsgurten 35 des oberen Längsträgers 32 und andererseits mit einem horizontalen Befestigungsflansch 49 verbunden ist.

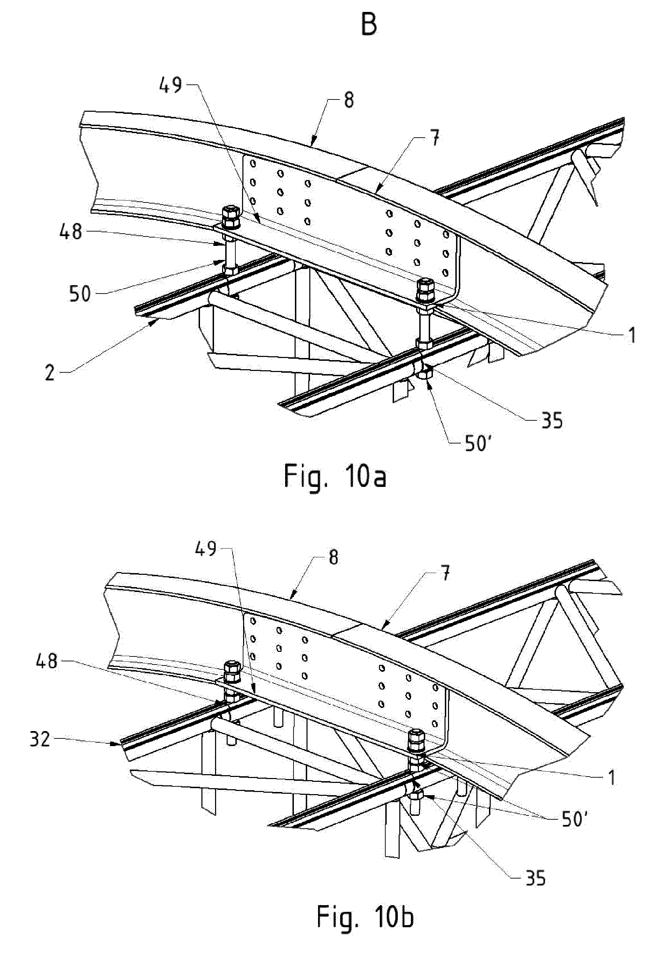

Gemäß Fig. 10 weist die Verstelleinrichtung 48 ein Verstellelement in Form einer Gewindestange 50 auf, welche mit Gewindemuttern 50' zusammenwirkt, um den Abstand zwischen dem oberen Längsträger 32 und der Schwenkeinrichtung 7 manuell einstellen zu können. Die Gewindestange 50 ist in der Ausführung der Fig. 10 im Wesentlichen senkrecht zur Längsrichtung des oberen Längsträgers 32 angeordnet. Die Längsgurte 35 des oberen Längsträgers 32 sind jeweils mit zumindest einer Gewindestange 50 verbunden.

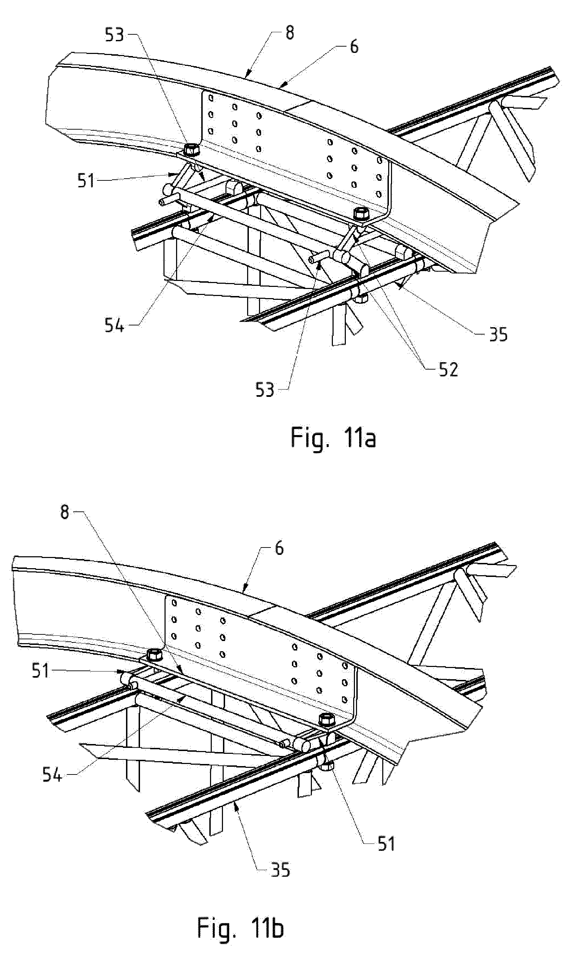

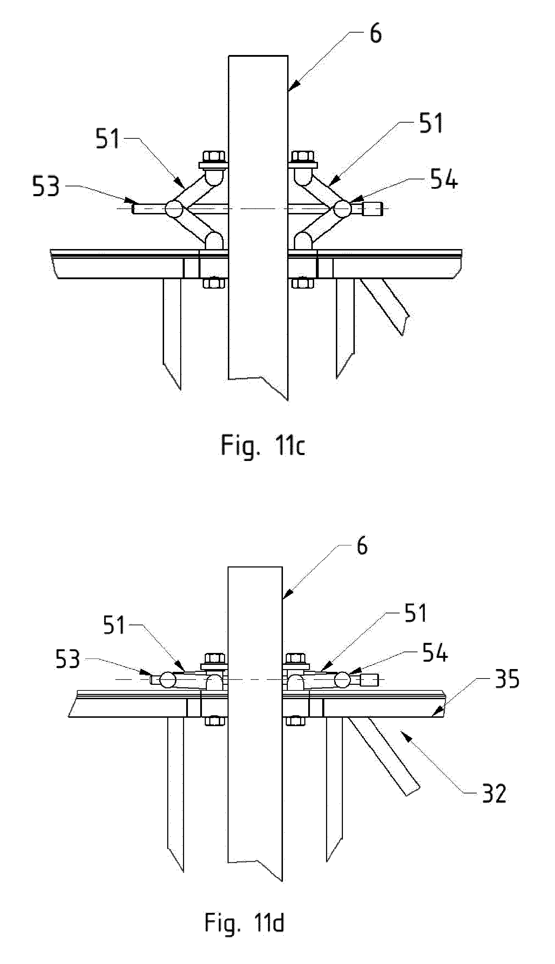

Gemäß Fig. 11 sind zwischen dem oberen Längsträger 32 und der Schwenkeinrichtung 7 mehrere Kniehebelelemente 51 angeordnet, welche an deren Enden gelenkig miteinander verbundene Schenkelteile 52 aufweisen. Zur Einstellung des Abstands zwischen der Schwenkeinrichtung 7 und dem oberen Längsträger 32 wird der Öffnungswinkel zwischen den Schenkelteilen 52 der Kniehebelelemente 51 angepasst. In der gezeigten Ausführung sind an beiden Längsgurten 35 jeweils zwei in Längsrichtung beabstandete Kniehebelelemente 51 befestigt, welche über zumindest ein Einstellelement 53 in Form einer Gewindestange miteinander gekoppelt sind. Durch Verstellung der Gewindestange kann der Öffnungswinkel der Kniehebelelemente 51 und damit der Abstand zwischen der Schwenkeinrichtung 7 und dem oberen Längsträger 32 eingestellt werden. In der gezeigten Ausführung sind zwei Einstellelemente 53 im Wesentlichen parallel zur Längsrichtung des oberen Längsträgers 32 horizontal angeordnet.

Wie aus Fig. 11 weiters ersichtlich, sind die Kniehebelelemente 53 an den gegenüberliegenden Längsgurten 35 des oberen Längsträgers 32 paarweise über Verbindungsstangen 54 miteinander verbunden. In der gezeigten Ausführung sind zwei Einstellelemente 53 in Form von Gewindestangen vorgesehen, welche verstellbar mit den Verbindungsstangen 54 verbunden sind.

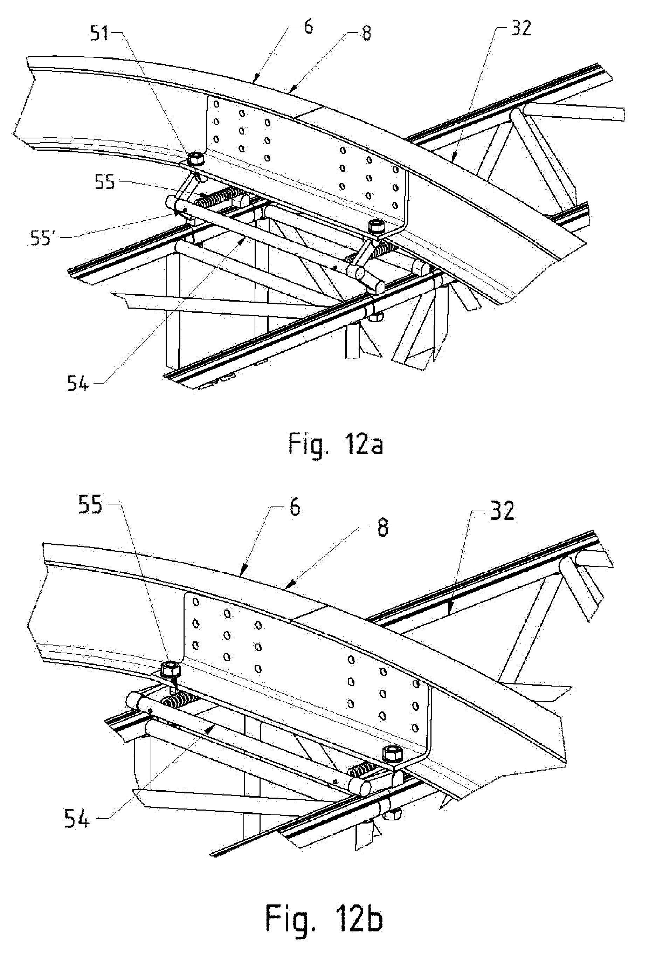

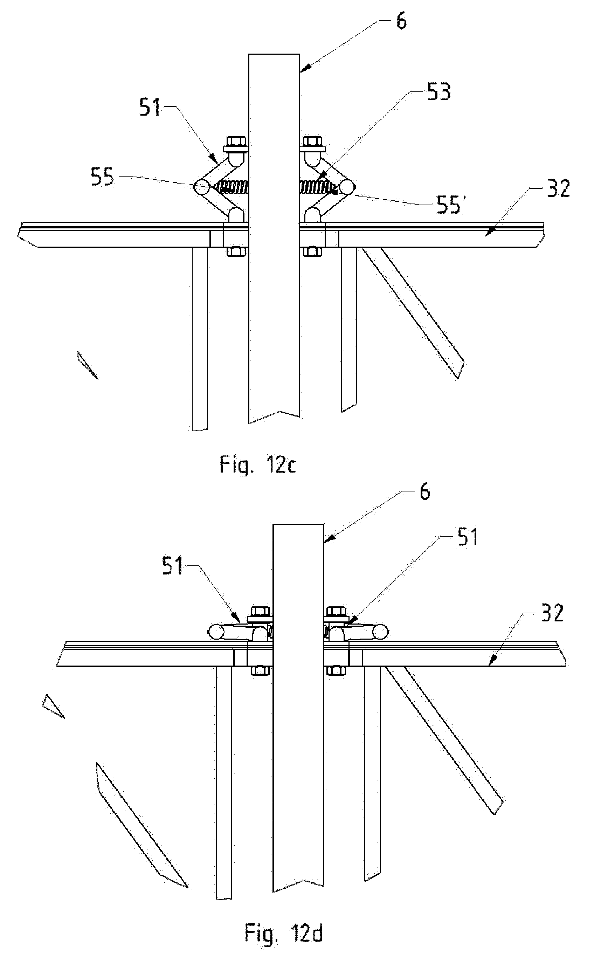

Gemäß Fig. 12 weist die Verstelleinrichtung 48 ein Antriebselement 55 auf, mit welchem der Abstand zwischen der Schwenkeinrichtung 7 und dem oberen Längsträger 32 abhängig von einem Lastzustand des oberen Längsträgers 32 (d.h. insbesondere abhängig von einer vertikalen Kraft infolge des Kriechens des Konzentrator-Kissens 2) selbsttätig nachstellbar ist. Als Antriebselement 55 ist ein Federelement 55' derart vorgesehen, dass der obere Längsträger 32 je nach Lastzustand des oberen Längsträgers 32 gegen die Kraft des Federelements 55' näher an den Schwenkring 8 heranführbar ist. In der gezeigten Ausführung sind die Einstellelemente 53 zwischen den Verbindungsstangen 54 als Antriebselemente 55 ausgebildet.

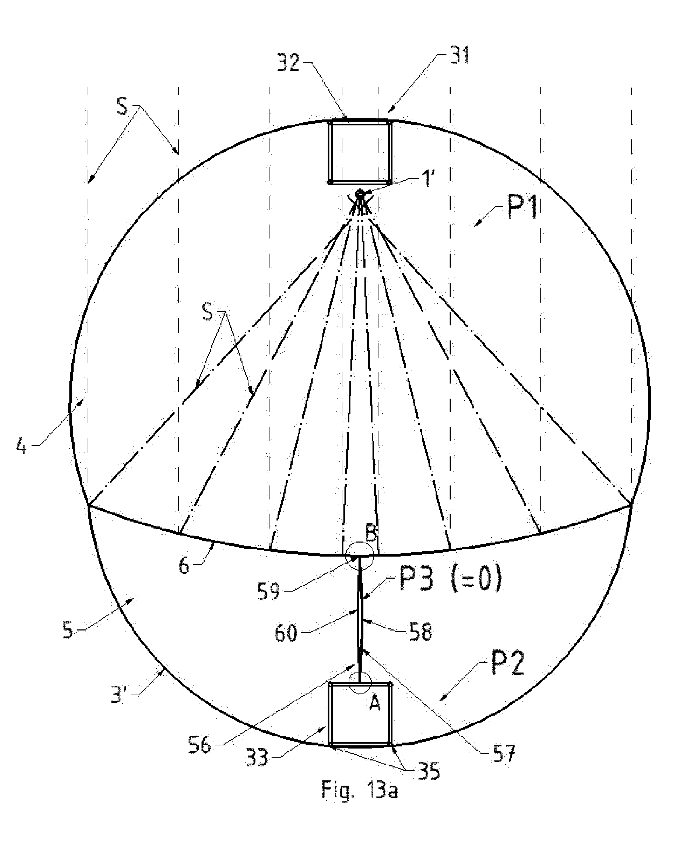

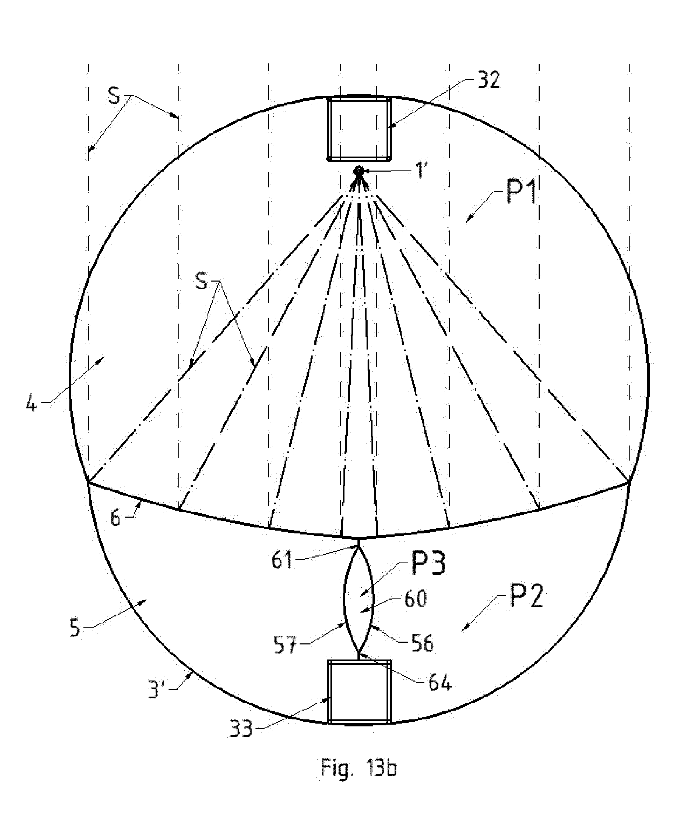

In den Fig. 13a, 13b ist eine weitere Ausführungsform der Konzentrator-Vorrichtung 1 gezeigt, wobei nachstehend lediglich die Unterschiede zu den vorherigen Ausführungsvarianten erläutert werden.

Gemäß Fig. 13a, 13b weist die Vorrichtung 1 eine Einstelleinrichtung 56 zur Einstellung der Wölbung der Reflektorfolie 6 des Konzentrator-Kissens 2 auf. Hiefür weist die Einstelleinrichtung 56 ein Spannelement 57 zwischen dem unteren Längsträger 33 der Halteeinrichtung 31 und der Reflektorfolie 6 auf, mit welchem im gespannten Zustand des Spannelements 57 eine Zugkraft auf die Reflektorfolie 6 übertragbar ist. Dadurch kann die Reflektorfolie 6 an der Angriffsstelle des Spannelements 57 in Richtung des unteren Längsträgers 33 der Halteeinrichtung 31 gezogen werden, wodurch die Wölbung der Reflektorfolie 6 im Querschnitt an eine Parabel angenähert wird. Auf diese Weise werden die einfallenden, im Wesentlichen parallelen Sonnenstrahlen S (vgl. die strichlierten Linien in Fig. 13a, 13b) an der aufgrund des Spannelements 57 im Wesentlichen parabelförmigen Spiegelfläche reflektiert, so dass die reflektierten Sonnenstrahlen S (vgl. die strichliert-punktierten Linien in Fig. 13a, 13b) präzise an dem in Längsrichtung des Konzentrator-Kissens 2 erstreckten Absorber 1' fokussiert werden.

In der gezeigten Ausführung ist als Spannelement 57 zur Anpassung der Wölbung der Reflektorfolie 6 ein Spannfolienelement 58 vorgesehen, welches im aufgeblasenen Zustand des Konzentrator-Kissens 2 zwischen dem unteren Längsträger 33 und der Reflektorfolie 6 gespannt ist. Das Spannelement 57 in Form des Spannfolienelements 58 greift an einem mittleren Längsabschnitt 59 der Reflektorfolie 6 an, welcher sich im Wesentlichen mittig zwischen den Längsrändern der Reflektorfolie 6 in Längsrichtung des Konzentrator-Kissens 2 erstreckt. Das Spannfolienelement 58 besteht aus einem biegsamen Material, welches bevorzugt ein Kunststoffmaterial ist. Um die Wölbung der Reflektorfolie 6 in Längsrichtung des Konzentrator-Kissens 2 gleichmäßig zu beeinflussen, erstreckt sich die Verbindung zwischen dem Spannfolienelement 58 und der Reflektorfolie 6 im Wesentlichen über die gesamte Länge der Reflektorfolie 6.

Wie aus Fig. 13a, 13b ersichtlich, weist das Spannfolienelement 58 eine aufblasbare Hohlkammer 60 auf. Durch Aufblasen der Hohlkammer 60 des Spannfolienelements 58 kann der Normalabstand zwischen dem unteren Längsträger 33 und der Reflektorfolie 6 verändert werden, um die vom Spannelement 57 auf die Reflektorfolie 6 übertragene Zugkraft einzustellen. Fig. 13a zeigt das Spannfolienelement 58 im unaufgeblasenen Zustand der Hohlkammer 60, wobei das Spannfolienelement 58 eine langgestreckte Gestalt einnimmt. Fig. 13b zeigt das Spannfolienelement 58 im aufgeblasenen Zustand der Hohlkammer 60, wobei das Spannfolienelement 58 durch die Befüllung der Hohlkammer 60 in einem verkürzten bzw. gestauchten Zustand vorliegt, so dass eine Spann- bzw. Zugkraft auf die Reflektorfolie 6 aufgebracht wird. Demnach kann der Fülldruck P3 der Hohlkammer 60 zur Anpassung der Wölbung der Reflektorfolie 6 erhöht werden. In dem oberen Hohlraum 4 wird ein Fülldruck P1 und im unteren Hohlraum 5 ein Fülldruck P2 eingestellt. Der Fülldruck P1 im oberen Hohlraum 4 ist größer als der Fülldruck P2 im unteren Hohlraum 5. Im unaufgeblasenen Zustand der Hohlkammer 60 gemäß Fig. 13a ist der Fülldruck P3 im Wesentlichen Null. Im aufgeblasenen Zustand der Hohlkammer 60 gemäß Fig. 13b ist der Fülldruck P3 größer als der Fülldruck P2 im unteren Hohlraum 5 des Konzentrator-Kissens 2.

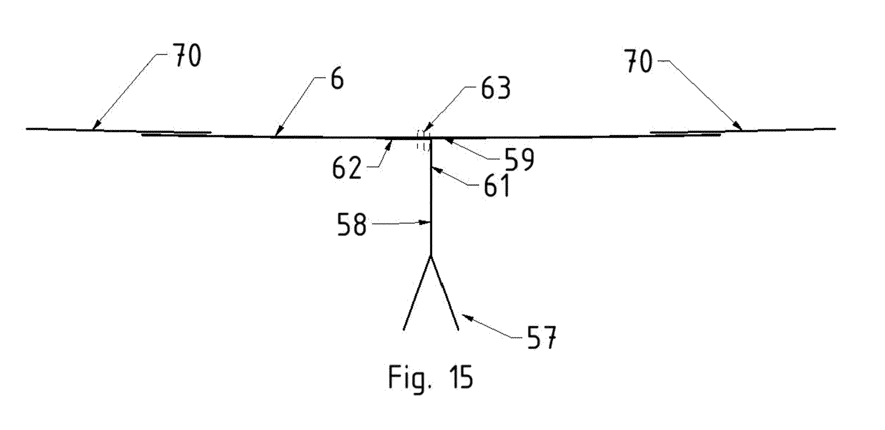

Wie aus Fig. 13a, 13b und insbesondere aus Fig. 15 weiters ersichtlich, weist das Spannfolienelement 58 einen Spannabschnitt 61 auf, welcher im Wesentlichen rechtwinkelig an dem mittleren Längsabschnitt 59 der Reflektorfolie 6 angreift. Der Spannabschnitt 61 geht in einen Verbindungsabschnitt 62 (vgl. Fig. 15) über, welcher in der gezeigten Ausführung über eine Naht 63 mit der Reflektorfolie 6 verbunden ist. Selbstverständlich können jedoch auch andersartige Fügeverbindungen, wie Klebeverbindungen, zwischen dem Spannelement 57 und der Reflektorfolie 6 vorgesehen sein. In Fig. 15 sind weiters schematisch Seitenwandfolienelemente 70 ersichtlich, welche seitlich an die Reflektorfolie 6 anschließen.

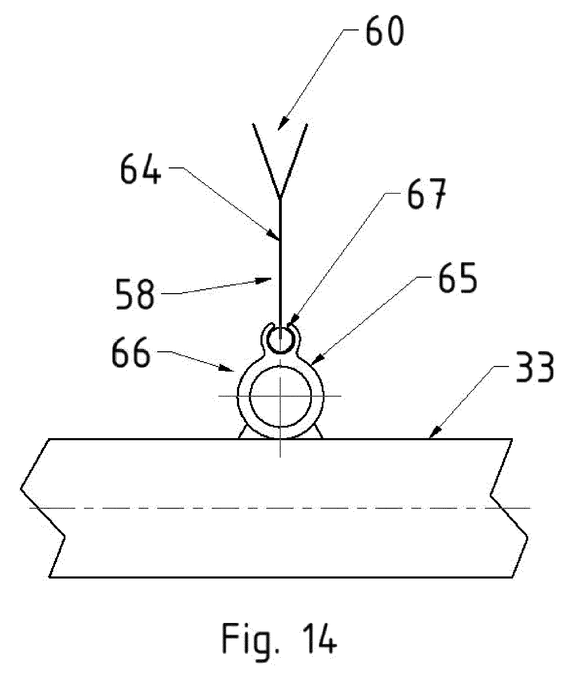

Gemäß Fig. 14a, 14b weist das Spannfolienelement 58 auf Seite des unteren Längsträgers 44 einen im aufgeblasenen Zustand des Konzentrator-Kissens 2 ebenen bzw. flachen Befestigungsabschnitt 64 auf, welcher im Wesentlichen mittig an der Oberseite des unteren Längsträgers 33 zwischen den oberen Längsgurten befestigt ist. Zu diesem Zweck weist der untere Längsträger 33 an der Oberseite im Wesentlichen mittig ein oberseitiges Befestigungselement 65 auf, welches über eine im Wesentlichen luftdichte Verbindung mit dem Befestigungsabschnitt 64 des Spannfolienelements 58 verbunden ist. In der gezeigten Ausführung ist zur Befestigung des Spannfolienelements 58 eine Kederschiene 66 vorgesehen, in welcher ein entsprechendes Kederelement 67 am unteren Längsrand des Befestigungsabschnittes 64 des Spannfolienelementes 58 angeordnet ist. Die Kederschiene 66 für das Spannfolienelement 58 ist entsprechend den zuvor beschriebenen Kederschienen für die luftdichte Anbindung des Bodenfolienelements 3' bzw. des Dichtfolienstreifens 36 an den unteren Längsträger 33 ausgebildet.

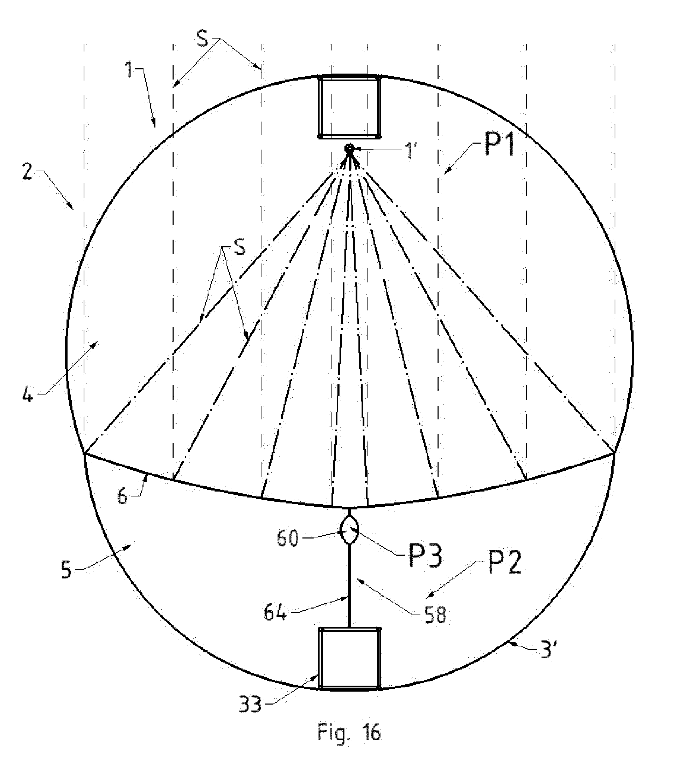

Gemäß Fig. 16 weist das Spannfolienelement 58 eine im Vergleich zur Ausführungsform der Fig. 13 bis 15 kleine Hohlkammer 60 auf. Bei dieser Ausführung erstreckt sich der Befestigungsabschnitt 64 des Spannfolienelements 58 über mehr als die halbe Höhe des Spannfolienelements 58.

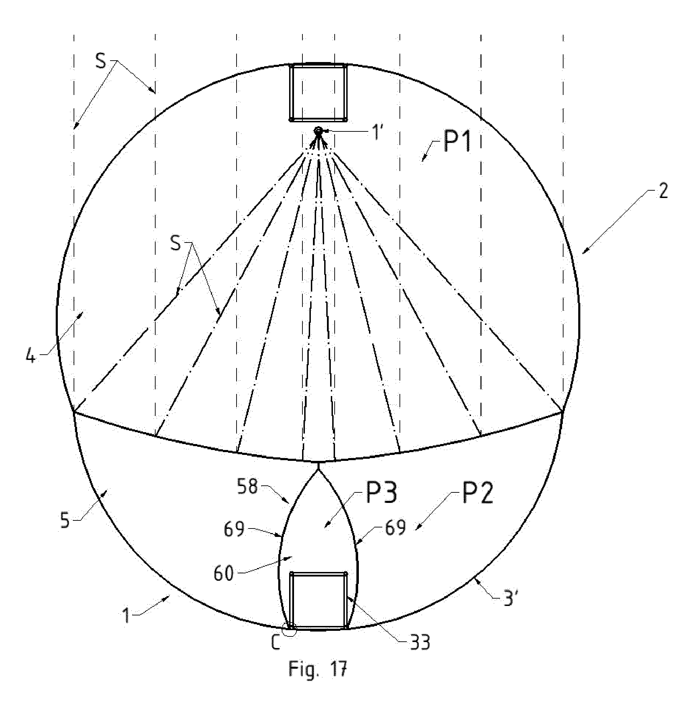

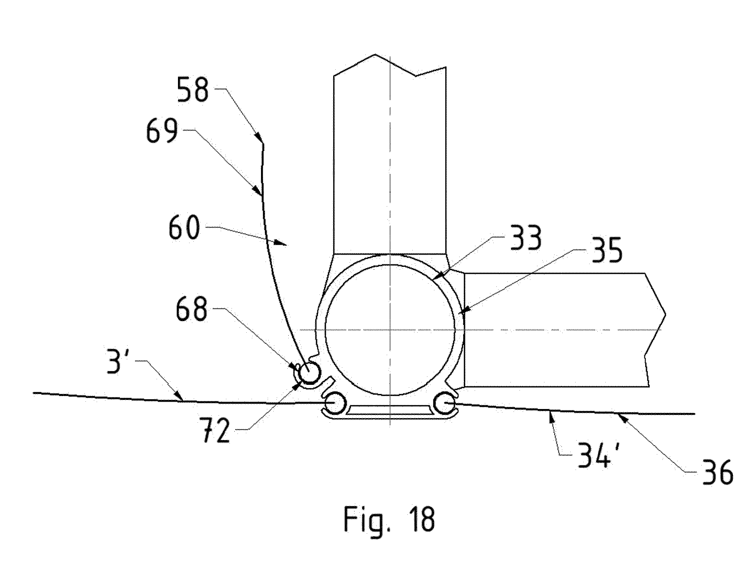

In der Ausführung der Fig. 17, 18 sind die Profilelemente 40 an den Längsgurten 35 des unteren Längsträgers 33 jeweils mit einem seitlichen Befestigungselement 68 zur im Wesentlichen luftdichten Verbindung mit einem Folienstreifen 69 verbunden. Bei dieser Ausführung wird die Hohlkammer 60 des Spannfolienelements 58 durch die zwei Folienstreifen 69 sowie den Dichtfolienstreifen 36 begrenzt. Als seitliche Befestigungselemente 68 sind weitere Kederschienen 71 vorgesehen, in welchen Kederelemente 72 am unteren Längsrand der Folienstreifen 69 angeordnet sind.

## Patentansprüche

1. Vorrichtung (1) zur Konzentration von Sonnenstrahlung in einem Absorber (1'),
mit einem aufblasbaren Konzentrator-Kissen (2), welches ein Deckfolienelement (3") mit einem lichtdurchlässigen Eintrittsfenster (3) zum Einkoppeln von Sonnenstrahlung und eine das Konzentrator-Kissen (2) in zumindest zwei Hohlräume (4, 5) unterteilende, im aufgeblasenen Zustand des Konzentrator-Kissens (2) eine Wölbung aufweisende Reflektorfolie (6) zum Konzentrieren der Sonnenstrahlung in einem Absorber (1') aufweist,
mit einer Schwenkeinrichtung (7), mit welcher das Konzentrator-Kissen (2) insbesondere um dessen Längsachse verschwenkbar ist,
mit einer an der Schwenkeinrichtung (7) befestigten Halteeinrichtung (31) zur Halterung des Konzentrator-Kissens (2), und
mit einer Einstelleinrichtung (56) zur Einstellung der Wölbung der Reflektorfolie (6) des Konzentrator-Kissens (2),
**dadurch gekennzeichnet, dass**
die Halteeinrichtung (31) einen in Längsrichtung des Konzentrator-Kissens (2) erstreckten unteren Längsträger (33) aufweist, welcher mit einem Bodenfolienelement (3') des Konzentrator-Kissens (2) verbunden ist,
wobei die Einstelleinrichtung (56) zur Einstellung der Wölbung der Reflektorfolie (6) ein Spannelement (57) zwischen dem unteren Längsträger (33) der Halteeinrichtung (31) und der Reflektorfolie (6) aufweist.

2. Vorrichtung (1) nach Anspruch 1, **dadurch gekennzeichnet, dass** das Spannelement (57) mit einem mittleren Längsabschnitt (59) der Reflektorfolie (6) verbunden ist, welcher sich im Wesentlichen mittig zwischen den Längsrändern der Reflektorfolie (9) in Längsrichtung des Konzentrator-Kissens (2) erstreckt.

3. Vorrichtung (1) nach Anspruch 1 oder 2, **dadurch gekennzeichnet, dass** das Spannelement (57) über im Wesentlichen die gesamte Länge der Reflektorfolie (6) mit der Reflektorfolie (6) und dem unteren Längsträger (33) verbunden ist.

4. Vorrichtung (1) nach einem der Ansprüche 1 bis 3, **dadurch gekennzeichnet, dass** das Spannelement (57) ein Spannfolienelement (58) aufweist, welches im aufgeblasenen Zustand des Konzentrator-Kissens (2) zwischen dem unteren Längsträger (33) und der Reflektorfolie (6) gespannt ist.

5. Vorrichtung (1) nach Anspruch 4, **dadurch gekennzeichnet, dass** das Spannfolienelement (57) einen im Wesentlichen rechtwinkelig an dem mittleren Längsabschnitt (59) der Reflektorfolie (6) angreifenden Spannabschnitt (61) aufweist.

6. Vorrichtung (1) nach Anspruch 4 oder 5, **dadurch gekennzeichnet, dass** das Spannfolienelement (57) eine aufblasbare Hohlkammer (60) zur Einstellung des Abstands zwischen dem unteren Längsträger (33) und der Reflektorfolie (6) durch Aufblasen der Hohlkammer (60) des Spannfolienelements (58) aufweist.

7. Vorrichtung (1) nach einem der Ansprüche 1 bis 6, **dadurch gekennzeichnet, dass** der untere Längsträger (33) im Wesentlichen luftdicht mit den eine untere Durchtrittsöffnung (34') des Konzentrator-Kissens (2) begrenzenden Längsrändern des Bodenfolienelements (3') des Konzentrator-Kissens (2) verbunden ist.

8. Vorrichtung (1) nach Anspruch 7, **dadurch gekennzeichnet, dass** der untere Längsträger (33) über Füllstäbe (38) miteinander verbundene Längsgurte (35) zur im Wesentlichen luftdichten Verbindung mit den die untere Durchtrittsöffnung (34') begrenzenden Längsrändern des Bodenfolienelements (3') aufweist, wobei zwischen den Längsgurten (35) ein die untere Durchtrittsöffnung (34') des Konzentrator-Kissens (2) überbrückender Dichtfolienstreifen (36) vorgesehen ist.

9. Vorrichtung (1) nach einem der Ansprüche 1 bis 8, **dadurch gekennzeichnet, dass** an den Längsgurten (35) des unteren Längsträgers (33) jeweils ein Profilelement (40) angeordnet ist, welches mit einem Verbindungselement (41) zur im Wesentlichen luftdichten Verbindung mit einem der Längsränder des Bodenfolienelements (3") und mit einem weiteren Verbindungselement (42) zur im Wesentlichen luftdichten Verbindung mit einem der Längsränder des Dichtfolienstreifens (36) verbunden ist.

10. Vorrichtung (1) nach Anspruch 9, **dadurch gekennzeichnet, dass** die Profilelemente (40) an den Längsgurten (35) des unteren Längsträgers (33) jeweils mit einem Befestigungselement (68) zur im Wesentlichen luftdichten Verbindung mit einem die Hohlkammer (60) des Spannfolienelements (58) begrenzenden Folienstreifen (69) verbunden sind.

11. Vorrichtung (1) nach einem der Ansprüche 4 bis 9, **dadurch gekennzeichnet, dass** der untere Längsträger (33) im Wesentlichen mittig zwischen den Längsgurten (35) ein oberseitiges Befestigungselement (65) zur Befestigung des Spannfolienelements (58) aufweist.

12. Vorrichtung (1) nach einem der Ansprüche 1 bis 11, **dadurch gekennzeichnet, dass** die Halteeinrichtung (31) einen in Längsrichtung des Konzentrator-Kissens (2) erstreckten oberen Längsträger (32) aufweist, wobei der obere Längsträger (32) im Wesentlichen luftdicht mit den eine obere Durchtrittsöffnung (34) des Konzentrator-Kissens (2) begrenzenden Längsrändern des Deckfolienelements (3") des Konzentrator-Kissens (2) verbunden ist.

13. Vorrichtung (1) nach einem der Ansprüche 1 bis 12, **dadurch gekennzeichnet, dass** die Schwenkeinrichtung (7) zumindest ein das Konzentrator-Kissen (2) in dessen Umfangsrichtung umschließendes Schwenkelement, insbesondere einen Schwenkring (8), aufweist, an dessen Innenseite der untere Längsträger (33), vorzugsweise auch der obere Längsträger (32), der Halteeinrichtung (31) befestigt sind.

14. Vorrichtung (1) nach einem der Ansprüche 1 bis 13, **dadurch gekennzeichnet, dass** eine Verankerungseinrichtung (9) zur Verankerung der Schwenkeinrichtung (7) an einer Bodenstruktur vorgesehen ist, welche vorzugsweise eine Aufhängeeinrichtung (10) zum Aufhängen der Schwenkeinrichtung (7) aufweist.
